# EUROPEAN PATENT SPECIFICATION

(11) **EP 1 753 219 B1**
(45) Date of publication and mention of the grant of the patent: **08.06.2011**
(21) Application number: 06016531.3
(22) Date of filing: 08.08.2006
(51) Int. Cl.: H04N 1/00

(54) **Image processing apparatus, image output method, and computer program product**
Bildverarbeitungsapparat, Bildausgabeverfahren, und Computerprogrammprodukt
Appareil de traitement d'images, méthode de sortie d'images et dispositif et programme d'ordinateur

(30) Priority: 08.08.2005 JP 2005229058; 08.08.2005 JP 2005229062
(43) Date of publication of application: 14.02.2007
(73) Proprietor: Ricoh Company, Ltd., Tokyo 143-8555 (JP)
(72) Inventor: Horiuchi, Yoshimine, Tokyo 143-8555 (JP)
(74) Representative: Schwabe - Sandmair - Marx

(56) References cited:
- US-A1- 2002 048 413
- US-A1- 2002 191 200
- US-A1- 2004 056 973
- US-B1- 6 281 983

## Description

### BACKGROUND OF THE INVENTION

### 1. Field of the Invention

The present invention relates to an image processing apparatus, such as a digital multi function peripheral, having plural image output functions such as a copy function, a printer function, a FAX function, and a scanner function, an image output method which is adopted in the image processing apparatus, and a computer program product which causes a computer (CPU) of the image processing apparatus to execute the image output.

### 2. Description of the Related Art

Some of the image processing apparatus, such as the digital multi function peripheral, include plural image processing units (image input units and image output units). Examples of the image processing unit include a scanner unit (original read unit) which reads an original image, a communication unit (having image reception means and image transmission means) which performs transmission and reception of the image with an external device, a storage unit (image storing unit) which stores the image, and a printer unit (print output unit) which performs print output of the image to a sheet.

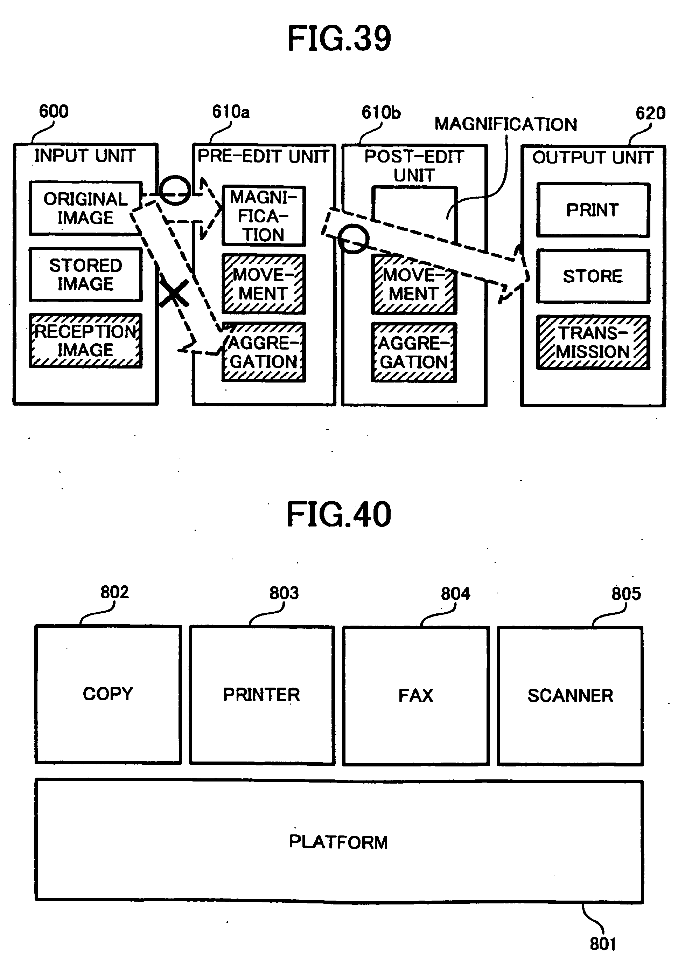

For example, Japanese Patent Laid-Open No. 2004-297792 discloses an image processing apparatus. The image processing apparatus disclosed in Japanese Patent Laid-Open No. 2004-297792 includes a control unit in which a CPU (microcomputer) is used. Furthermore, as shown in Fig. 40, these image processing apparatuses include applications such as a copy application 802, a printer application 803, a FAX application 804, and a scanner application 805 on one platform (basic program such as OS) 801, the applications 802 to 805 are allocated to function keys on an operation unit, and the CPU selectively executes each of the applications 802 to 805 by pressing down the function key on the operation unit. Therefore, the required processed image can be output using the image processing unit corresponding to the pressed-down function key.

As used herein, the application shall mean application software or an application program. The application corresponds to a portion which perform user interface, and the application is one which realizes a function provided to a user.

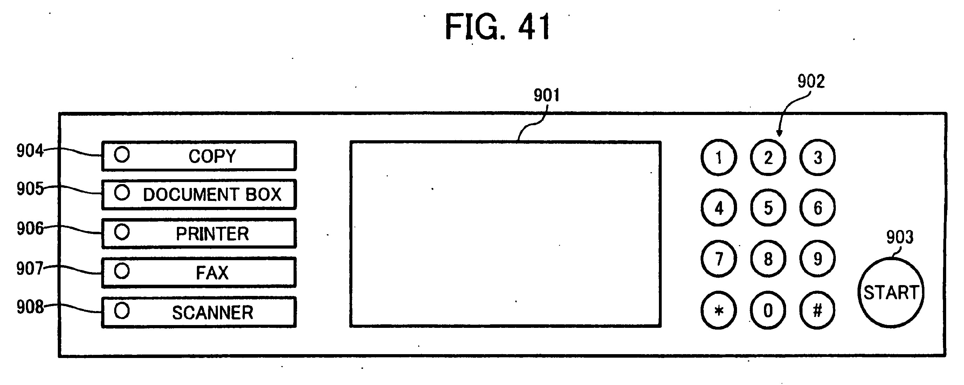

However, in the conventional image processing apparatus, because the applications do not cooperate with one another, it is impossible that output of the required processed images (plural processed images) is realized by a simple operation. That is, as shown in Fig. 41, in addition to a liquid crystal touch panel 901, a ten key 902, and a start key 903, the conventional operation unit includes a copy key 904, a document box key 905, a printer key 906, a FAX key 907, and a scanner key 908. The copy key 904, the document box key 905, the printer key 906, the FAX key 907, and the scanner key 908 correspond to a copy function, a document box function, a printer function, a FAX function, and a scanner function, which are of an image output function, respectively. Therefore, it is necessary to perform the troublesome operations, in the case where the required processed image is output with each corresponding image processing unit by executing the applications corresponding to the plural image output functions.

For example, when both copy of the original image to the sheet and delivery of the original image to PC (personal computer) are performed, it is necessary that the CPU separately execute the copy application and the scanner application to use the scanner unit, the printer unit, and the network delivery unit (communication unit). In order to execute the applications, a user is required to separately perform the key operations corresponding to the applications on the operation unit.

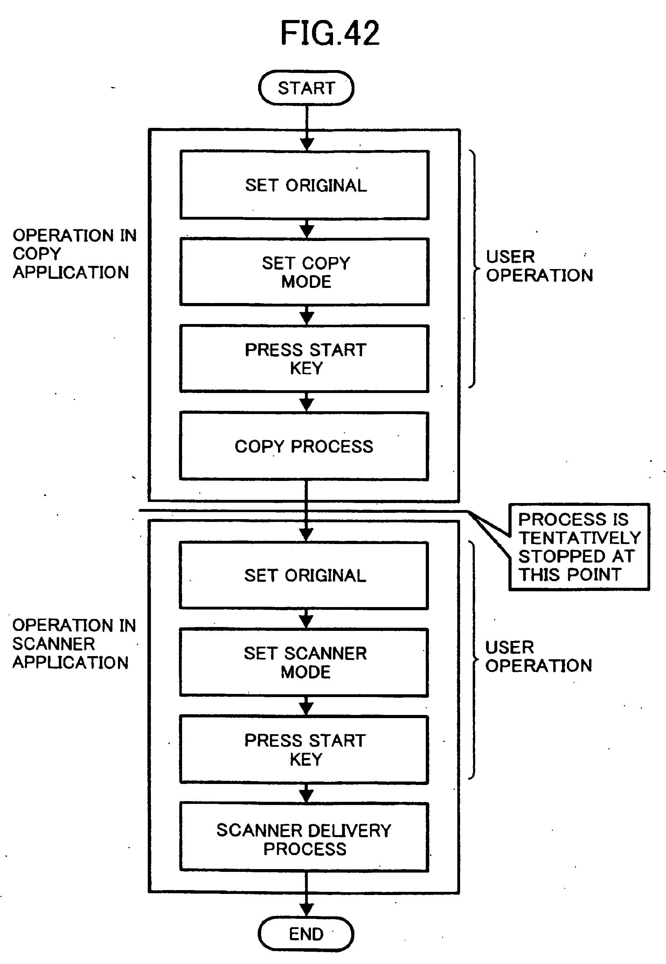

The key operation will be described in detail. As shown in Fig. 42, an original is set on a contact glass, the copy key 904 of Fig. 41 is pressed down to set the copy mode (at this point, because a screen corresponding to the copy function is displayed on the liquid crystal touch panel 901, a copy condition is set if needed), and the copy process (process of reading the original image to print the original image in the sheet) is performed by pressing down the start key 903. When the copy process is ended, the original is set on the contact glass again, the scanner key 908is pressed down to set the scanner mode (at this point, because the screen corresponding to the scanner function is displayed on the liquid crystal touch panel 901, a read condition or a delivery address is set if needed), and a scanner delivery process (process of reading the original image to deliver the original image to PC) is performed by pressing down the start key 903.

Thus, in the case where the required processed images are output with each corresponding image processing unit by executing the applications corresponding to the plural image output functions, it is necessary that usually the user separately perform the key operations corresponding to the applications. Furthermore, in the case where the required processed image is output, the user is required to comprehend which application is executed. Sometimes the user cannot comprehend which application is executed. Accordingly, there is a problem that the conventional image processing apparatus is inconvenient.

US-2002/191200 A1 describes a network system in which a plurality of image processing apparatuses are connected. The system is to allow display based on the setting positions of devices in selection of a desired device to be used, and facilitate selection considering the setting positions of the devices. The system can also display equipments so as to allow discrimination between an equipment included in an image processing apparatus and an equipment connected on a communication line. Equipments in a network environment are placed on the first floor, the second floor, and the third floor in a building and connected through a network. For example, a computer collects device information including status information and setting position information from usable input/output devices. For example, status information representing "BUSY" and setting position information representing "3F-B block" are transferred from a virtual optical scanner. The computer displays the connected input/output devices together with the setting position information obtained from the devices. An image processing apparatus has various input/output devices including a reader unit, a printer unit, and an image input/output control unit. In addition, various input/output equipments (two optical scanner devices and three facsimile transmission/reception devices) are connected to the image processing apparatus through a LAN interface unit and the LAN. A CPU of a core unit manages the input/output equipments to determine whether they are connected through the network. When a desired input/output equipment is to be selected, whether the input/output equipments are connected through the network is explicitly indicated.

### SUMMARY OF THE INVENTION

The invention is defined by the subject-matter of the independent claims. The dependent claims are directed to advantageous embodiments.

### ADVANTAGES OF THE INVENTION

Advantageously, an image processing apparatus includes a plurality of image processing units; an output-form specifying unit which specifies an output form of an input image; a processing-units selecting unit which selects at least two of the image processing units for processing the input image based on specified output form; and a control unit which causes selected image processing units to process the input image based on the specified output form.

Advantageously, an image output method includes specifying an output form of an input image; selecting at least two image processing units from among a plurality of image processing units for processing the input image based on specified output form; and causing selected image processing units to process the input image based on the specified output form.

Advantageously, it is provided a computer program product that stores therein a computer program which when executed causes a computer to execute the above method.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 shows an example of a network environment in which a digital multi function peripheral according to an embodiment is used;
Fig. 2 shows a mechanism structure of the digital multi function peripheral shown in Fig. 1;
Fig. 3 is a layout view showing a configuration of an operation unit of the digital multi function peripheral shown in Fig. 2;
Fig. 4 is a block diagram of a control system of the digital multi function peripheral shown in Fig. 2;
Fig. 5 is a block diagram of a program main part in a ROM of Fig. 4;
Fig. 6 is a block diagram of the image processing unit (IPU) of Fig. 5;
Fig. 7 is a timing chart of an example of image data and a control signal of one page in the selector of Fig. 6;
Fig. 8 is a flowchart of a first example of control according to the invention performed by the main controller shown in Fig. 4;
Fig. 9 shows a first example of an operation screen for explaining an operation procedure when a required image to be processed is output from the digital multi function peripheral shown in Fig. 2;
Fig. 10 shows a second example of the operation screen;
Fig. 11 shows a third example of the operation screen;
Fig. 12 shows a fourth example of the operation screen;
Fig. 13 shows a fifth example of the operation screen;
Fig. 14 shows a sixth example of the operation screen;
Fig. 15 shows a seventh example of the operation screen;
Fig. 16 is a functional block diagram of a main part according to the invention along with an image transfer path when a control system of the digital multi function peripheral shown in Fig. 2 is seen from the viewpoint of user;
Fig. 17 is a functional block diagram showing another configuration of the main part according to the invention from the viewpoint of system;
Fig. 18 is a flowchart of a second example of the control according to the invention performed by the main controller shown in Fig. 4;
Fig. 19 shows a first example of a preview image displayed on a liquid crystal touch panel when one original image is read with the scanner of Fig. 2;
Fig. 20 shows a second example of the preview image displayed on the liquid crystal touch panel;
Fig. 21 shows a third example of the preview image displayed on the liquid crystal touch panel;
Fig. 22 is a functional block diagram showing another configuration of the main part according to the invention along with an image transfer path when the control system of the digital multi function peripheral shown in Fig. 2 is seen from the viewpoint of user;
Fig. 23 is a functional block diagram of the main part according to the invention from the viewpoint of system;
Fig. 24 is a flowchart of a sub-routine of a preview image process of Step S52 shown in Fig. 18;
Fig. 25 shows a first example of a preview image displayed on the liquid crystal touch panel when plural original images are read with the scanner of Fig. 2;
Fig. 26 shows a second example of the preview image displayed on the liquid crystal touch panel;
Fig. 27 shows a third example of the preview image displayed on the liquid crystal touch panel;
Fig. 28 shows a fourth example of a preview image displayed on the liquid crystal touch panel;
Fig. 29 is a flowchart of a third example of the control according to the invention performed by the main controller shown in Fig. 4;
Fig. 30 shows an operation screen including a message of setting NG, which is displayed on the liquid crystal touch panel of Fig. 3;
Fig. 31 is a functional block diagram showing another configuration of the main part according to the invention along with another image transfer path when the control system of the digital multi function peripheral shown in Fig. 2 is seen from the viewpoint of user;
Fig. 32 is a flowchart of a fifth example of the control according to the invention performed by the main controller shown in Fig. 4;
Fig. 33 is a flowchart of a sixth example of the control according to the invention performed by the main controller shown in Fig. 4;
Fig. 34 is a functional block diagram showing still another configuration of the main part according to the invention along with an image transfer path when the control system of the digital multi function peripheral shown in Fig. 2 is seen from the viewpoint of user;
Fig. 35 is a functional block diagram showing still another configuration of the main part according to the invention along with another image transfer path from the viewpoint of system;
Fig. 36 is a functional block diagram showing still another configuration of the main part according to the invention from the viewpoint of system;
Fig. 37 is an explanatory view for explaining an image output process including a pre-variable magnification process, which is performed by the control system;
Fig. 38 is an explanatory view for explaining an image output process including a post-variable magnification process, which is performed by the control system;
Fig. 39 is a functional block diagram showing still another configuration of the main part according to the invention along with still another image transfer path when the control system of the digital multi function peripheral shown in Fig. 2 is seen from the viewpoint of user;
Fig. 40 is a block diagram of a main part of a program used in the conventional image processing apparatus;
Fig. 41 is a layout view showing a configuration of the operation unit; and
Fig. 42 is a flowchart schematically showing image output control performed by the main controller and a user operation.

### DETAILED DESCRIPTION OF THE PREFERRED EMBODIMENTS

Exemplary embodiments of the invention will be described below with reference to the accompanying drawings. In the following embodiments, a digital multi function peripheral (MFP) including the copy function, the printer function, the FAX function, the mail delivery function, and the scanner function will be described as an example of the image processing apparatus.

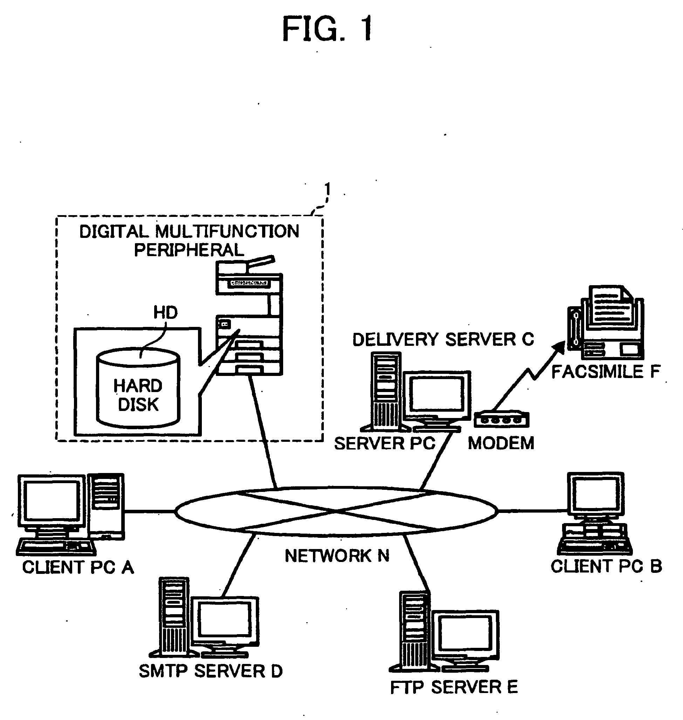

First a network environment in which the digital multi function peripheral which is of the image processing apparatus according to the embodiment is used will be described with reference to Fig. 1. Fig. 1 shows an example of a network environment of the digital multi function peripheral. Referring to Fig. 1, a hard disk HD is incorporated in a digital multi function peripheral 1, and the digital multi function peripheral 1 is connected to various external devices through a network N such as a local area network (LAN). The external devices includes personal computers (PC) A and B which are of plural client terminals, a delivery server C having a server S and a modem M for communicating with a facsimile F, a simple mail transfer protocol (SMTP) server D, and a file transfer protocol (FTP) server E.

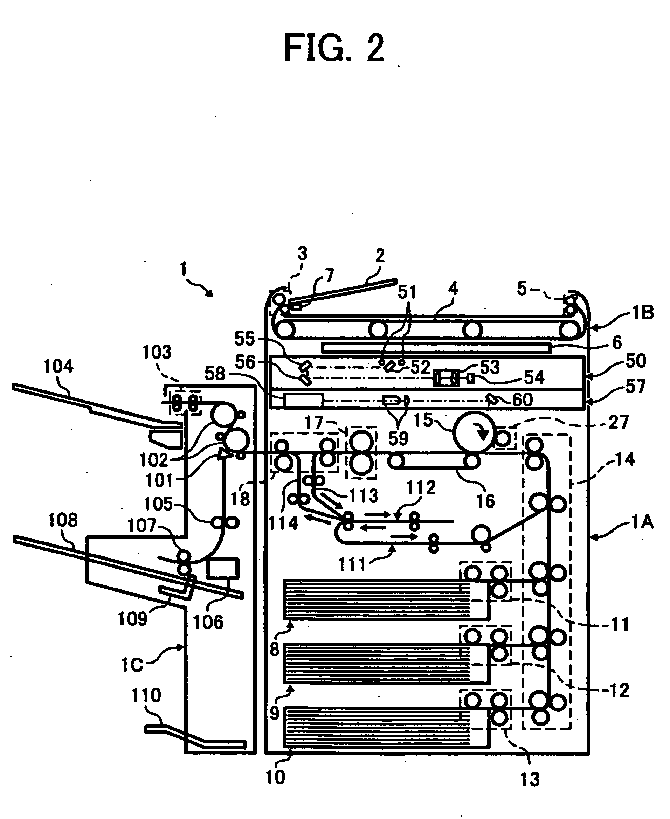

Then, a configuration of a mechanism portion in the digital multi function peripheral of the embodiment will be described. Fig. 2 shows a configuration of the mechanism portion of the digital multi function peripheral which of an image processing apparatus used in the invention. The digital multi function peripheral 1 includes an apparatus main body 1A, an automatic document feeder (hereinafter abbreviated to "ADF") 1B, and a finisher 1C. ADF 1B is mounted on an upper portion of the apparatus main body 1A, and the finisher 1C is attached to a side face in which a paper discharge port is provided.

The configuration of the digital multi function peripheral 1 will be described by the operation during the copy function which is of a main function of the digital multi function peripheral 1. An original bundle is placed on an original plate 2 of ADF 1B while a surface of an original image is orientated upward. When a print key on an operation unit is pressed down, the originals are sequentially fed to a predetermined position on a contact glass 6 from the lower-most original of the original bundle by a feed roller 3 and a feed belt 4. The digital multi function peripheral 1 also has a count function of incrementing the number of originals at each time when the feed of one original is completed.

In the original fed to the predetermined position on the contact glass 6, the image in the surface on the side of the contact glass 6 is read by a scanner (original read unit) 50. Then, the original in which the image is read is discharged by the feed belt 4 and a discharge roller 5. The feed roller 3, the feed belt 4, the discharge roller 5 are driven by a conveyance motor (not shown). An original setting detection sensor 7 detects whether or not the next original exists on the original plate 2 at each time when the read of one original image is ended. When the next original exists on the original plate 2, the next original is similarly fed onto the contact glass 6, and the same operation is repeated.

The scanner 50 includes the contact glass 6 on which the original is placed and an optical scan system. The optical scan system includes an exposure lamp 51, a first mirror 52, a second mirror 55, a third mirror 56, a lens 53, and a CCD image sensor 54. The exposure lamp 51 and the first mirror 52 are fixed on a first carriage (not shown), and the second mirror 55 and the third mirror 56 are fixed on a second carriage (not shown). When the original image is read, the first carriage and the second carriage are mechanically scanned at a relative speed of 2:1 such that an optical path length is not changed.

The optical scan system is driven by a scanner drive motor (not shown). The original image set on the contact glass 6 is read by the CCD image sensor 54, and the original image is converted into an electric signal and processed. That is, the original image surface is illuminated with the exposure lamp 51 of the optical scan system, the image reflected from the image surface is imaged on a light acceptance surface of the CCD image sensor 54 through the first mirror 52, the second mirror 55, the third mirror 56, and the lens 53, and the image is converted into the electric signal by the CCD image sensor 54. At this point, image reading magnification is changed in an original feed direction by moving the lens 53 and the CCD image sensor 54 in a horizontal direction of Fig. 2. That is, positions in the horizontal direction of the lens 53 and the CCD image sensor 54 are set according to the previously set image reading magnification.

The original image data (image information) read by the scanner 50 is written on a photosensitive drum 15 with a laser beam which is modulated by a writing unit 57 constituting a plotter (print output unit). The writing unit 57 includes a laser output unit 58, an imaging lens 59, and a mirror 60. A laser diode which is of alight source and a polygon mirror which is constantly rotated at high speed by a motor are provided in the laser output unit 58. The surface of the photosensitive drum 15 which is rotated in a direction of an arrow is evenly charged by a charging unit (not shown), and the surface of the photosensitive drum 15 is irradiated with the laser beam output from the writing unit 57, and thereby an electrostatic latent image is formed on the surface of the photosensitive drum 15.

On the other hand, a first tray 8, a second tray 9, and a third tray 10 are arranged in a multiple-stage manner in a lower portion of the inside of the apparatus main body 1A. Sheets of transfer paper stored in the first tray 8, the second tray 9, and the third tray 10 are fed by a first paper-feed device 11, a second paper-feed device 12, and a third paper-feed device 13 respectively, and the sheet is conveyed to a position where the sheet abuts on the photosensitive drum 15 by a vertical conveyance unit 14. However, actually any one of the trays 8 to 10 is selected, and the transfer paper is fed from the selected paper feed tray.

In addition to the normal transfer paper, index paper can be set (stored) in the first tray 8, the second tray 9, and the third tray 10. Paper set detection sensors (not shown) are arranged near the first tray 8, the second tray 9, and the third tray 10 respectively. The paper set detection sensor detects the normal transfer paper or the index paper, when the normal transfer paper or index paper is set in the tray. The paper feed tray of itself or a combination of the paper feed tray and the paper feeder is called paper feed stage (paper feed unit).

As described above, the electrostatic latent image formed on the photosensitive drum 15 is developed to form a toner image on the photosensitive drum 15 by passing through a development unit 27. The toner image on the photosensitive drum 15 is transferred to the transfer paper fed by the vertical conveyance unit 14 while the transfer paper is conveyed at the same speed as the rotation of the photosensitive drum 15 by a conveyance belt 16. Then, the toner image is fixed by a fixing unit 17, and the transfer paper onto which the toner image is fixed is discharged as a copied paper to the finisher 1C which is of a post-processing device by a paper discharge unit 18.

At this point, when the transfer paper in which the toner image is formed in one surface is reversed for face-down paper discharge (the image is orientated downward to arrange the sheets of transfer paper in the order of page), a branching pawl (not shown) is switched in the paper discharge unit 18 to convey the transfer paper to a reversing unit 112 through a double-sided in-paper conveyance path 113, and thereby the transfer paper is reversed. Then, switchback conveyance is performed to discharge the transfer paper to the finisher 1C through a reverse paper discharge conveyance path 114. In the finisher 1C, a switch board 101 is provided to selectively guide the copied transfer paper conveyed by the paper discharge unit 18 of the apparatus main body 1A toward a direction of a normal paper discharge unit and a direction of a staple processing unit. The copied transfer paper can be discharged to a normal paper discharge tray 104 through paper-discharge conveyance rollers 102 and 103 by switching the switch board 101 upward. When the switch board 101 is switched downward, the copied transfer paper can be conveyed onto a staple plate 108 through conveyance rollers 105 and 107.

In the sheets of copied transfer paper stacked on the staple plate 108, an end face of the paper is aligned by a jogger 109 (also used as a drop stopper) which aligns the paper at each time when the one sheet of transfer paper is discharged. When one copy of the sheets of transfer paper (copy of a series of plural sheets) is completed, the copy is bound by a stapler 106. A group of sheets of copied transfer paper bound by the stapler 106 drops on a staple-completed paper discharge tray 110 by deadweight, and the group of sheets of copied transfer paper is stored in the staple-completed paper discharge tray 110. On the other hand, the normal paper discharge tray 104 is a paper discharge tray which can be moved in a depth direction of Fig. 2. The normal paper discharge tray 104 is moved in the depth direction in each original or each copy sorted by a later-mentioned image memory, and the normal paper discharge tray 104 can simply sort the copied transfer paper discharged.

In the case of a double-sided copy mode in which the images are formed in both the surfaces of the transfer paper, the transfer paper is fed from any one of the paper feed trays 8 to 10 in the apparatus main body 1A to form the image in one of the surfaces of the transfer paper, the transfer paper (single-surface copied transfer paper) is conveyed to the reversing unit 112 through the double-sided in-paper conveyance path 113 by switching the branching pawl (not shown) in the paper discharge unit 18, and thereby the transfer paper is reversed. Then, the switchback conveyance is performed to send the transfer paper to a double-sided conveyance unit 111, and the transfer paper is reversed again.

The transfer paper sent to the double-sided conveyance unit 111 is fed from the double-sided conveyance unit 111 again in order to transfer the toner image created in the photosensitive drum 15, the transfer paper is conveyed to the position where the transfer paper abuts on the photosensitive drum 15 by the vertical conveyance unit 14 again, and the toner image is transferred to the other surface. The toner image is fixed by the fixing unit 17, and the transfer paper is discharged to the finisher 1C by the paper discharge unit 18. The same operation is performed by the finisher 1C, the transfer paper is normally discharged in each sheet of transfer paper, or the sheets of transfer paper are staled in each copy. Thus, the double-sided conveyance unit 111 is used when the images are formed in both the surfaces of the transfer paper.

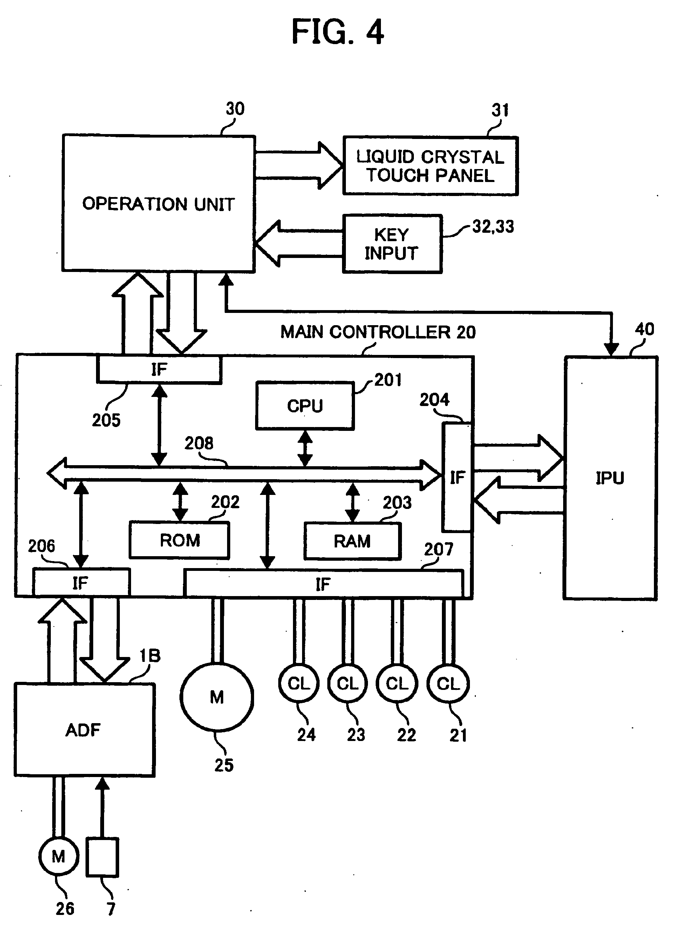

The both sides of the transfer paper are changed with the double-sided conveyance unit 111 even in performing the later-mentioned printing to the backside of the transfer paper in which the toner image is formed. A main motor (not shown) drives the photosensitive drum 15, the conveyance belt 16, the fixing unit 17, the paper discharge unit 18, and the development unit 27, and a paper-feed clutch transmits the drive of the main motor to the paper-feed devices 11 to 13, and thereby the paper-feed devices 11 to 13 are driven. An intermediate clutch transmits the drive of the main motor to the vertical conveyance unit 14, and thereby the vertical conveyance unit 14 is driven. The drive of the main motor will be described later with reference to Fig. 4.

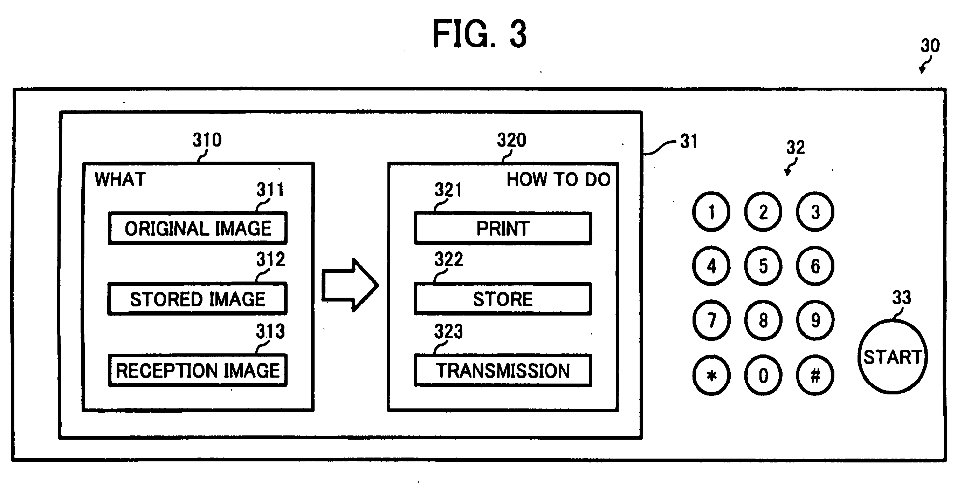

Then, a configuration and a display example of the operation unit of the digital multi function peripheral according to the embodiment will be described. Fig. 3 is a layout view showing a configuration of the operation unit of the digital multi function peripheral 1. A liquid crystal touch panel 31, a ten key 32, and a start key 33 are provided in an operation unit 30. The later-mentioned various function keys, the set number of copies, a message indicating a status of the digital multi function peripheral are displayed in the liquid crystal touch panel 31. When each function key is pressed down, the monochrome display is reversed. The ten key 32 is a key which is used to input numerical values of the number of prints (the number of copies), copy magnification, and the like.

An operation screen according to the invention displayed on the liquid crystal touch panel 31 will briefly described below. The operation screen including an input image specifying unit 310 and the output form specifying unit 320 is displayed on the liquid crystal touch panel 31 at predetermined timing such as power-on of the digital multi function peripheral 1. The input image specifying unit 310 includes an original image key 311, a stored image key 312, and a reception image key 313 for specifying an original image, a stored image, and a reception image which are of an input image respectively. The output form specifying unit 320 includes a print key 321, a store key 322, and a transmission key 323 for specifying print, store, and transmission which are of an output form of the input image respectively.

The original image key 311 is used to specify the original image which is of the image such as a document and a graphic on the original. The stored image key 312 is used to specify the stored image which is of the image data such as a document and a graphic in an image memory 66. The reception image key 313 is used to specify the reception image which is of the image received from the external devices such as the personal computers A and B and the delivery server C of Fig. 1. The print key 321 is used to specify the print output. The store key 322 is used to specify storing of an image. The transmission key 323 is used to specify the transmission (delivery).

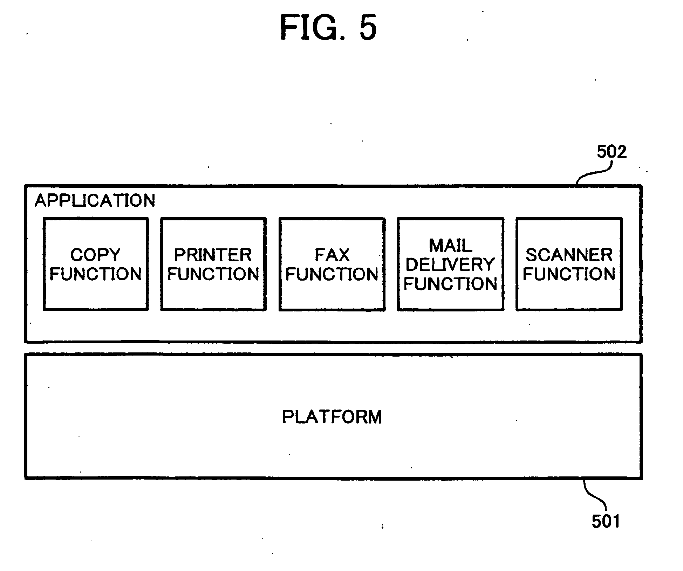

Then, a configuration of a control system of the digital multi function peripheral 1 will be described with reference to Figs. 4 and 5. Fig. 4 is a block diagram of the control system of the digital multi function peripheral 1. A main controller 20 is a control unit which controls the whole of the digital multi function peripheral 1. The main controller 20 includes a CPU (computer) 201 which is of a central processing unit, a ROM 202 which is of a program memory, a RAM 203 which is of a data memory, various interface circuits (IF) 204 to 207 which establish connection with the outside, and a CPU bus 208 which connects the CPU 201, the ROM 202, the RAM 203, IFs 204 to 207. The IF 207 includes a drive circuit which drives the motor and the clutch.

Distributed control devices such as the operation unit 30, an image processing unit (IPU) 40, and ADF 1B are connected to the main controller 20. In the operation unit 30, the display is performed for an operator (user), and key input (such as function setting input) is performed by the operator. The IPU 40 controls a drive unit of the scanner 50 and controls the read and write of image data to the image storage device such as the image memory. ADF 1B performs the paper-feed and paper-discharge operations of the original. Although the finisher 1C is also connected to the main controller 20, the finisher is neglected in Fig. 4. The distributed control devices communicate with the main controller 20 about information on a machine status and an operation command if needed. A main motor 25, an intermediate clutch 21, and first to third paper-feed clutches 22 to 24 which are necessary for the paper conveyance are also connected to the main controller 20, and the main controller 20 directly controls the drive of the main motor 25, the intermediate clutch 21, and the first to third paper-feed clutches 22 to 24.

The main motor 25 drives the photosensitive drum 15, the conveyance belt 16, the fixing unit 17, the paper discharge unit 18, and the development unit 27 which are shown in Fig. 2, and the drive of the main motor 25 is transmitted to the paper-feed devices 11 to 13 to drive the paper-feed devices 11 to 13 by the paper-feed clutches 22 to 24. The drive of the main motor 25 is transmitted to the vertical conveyance unit 14 to drive the vertical conveyance unit 14 by the intermediate clutch 21. As described above, the liquid crystal touch panel 31, the ten key 32, the start key 33, and the like are provided in the operation unit 30, and the conveyance motor 26 which drives the part for conveying the original and the original setting detection sensor 7 which detects the setting status of the original are provided in the ADF 1B.

Fig.. 5 is a block diagram of a main part of a program (software) in the ROM 202 of Fig. 4. The program in the ROM 202 has various programs including applications 502 for realizing the copy function, the printer function, the FAX function, the mail delivery function, and the scanner function on a platform (basic program) 501.

The CPU 201 of the main controller 20 executes the program according to the invention in the ROM 202 using the liquid crystal touch panel 31 and the IPU 40, which allows the functions of the inventions to be performed. The functions include an input image specifying unit, an output form specifying unit, a selection determination unit, a control unit (a read processing unit, a preview image producing unit, a preview image display unit, and an output permission unit), a preview image storage unit, an edit content setting unit, and an edit unit.

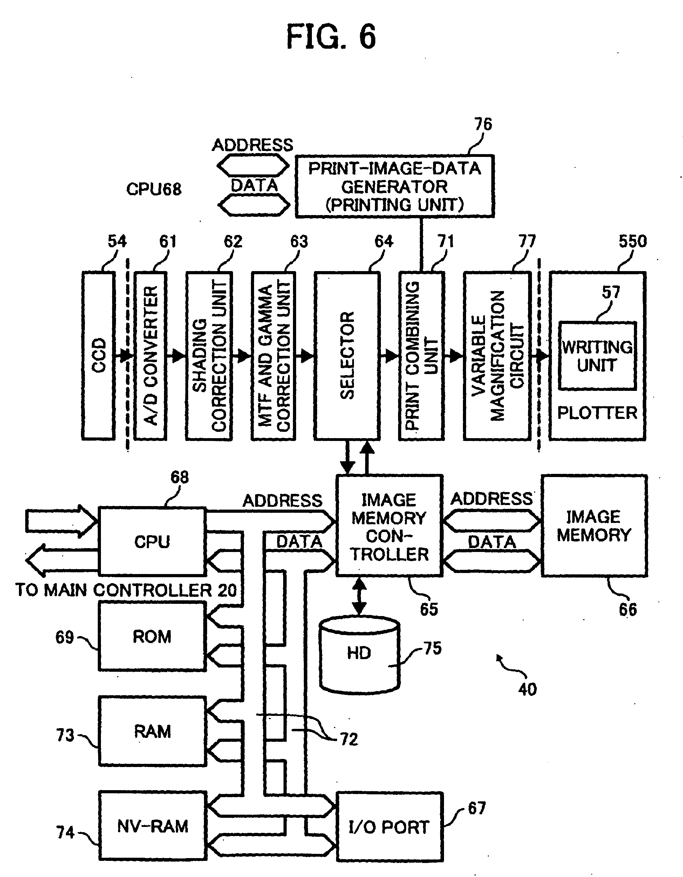

Fig. 6 is a block diagram of the IPU 40. The IPU 40 includes an A/D converter 61, a shading correction unit 62, an MTF and gamma correction unit 63, the image memory 66, a hard disk (HD) 75, and an image memory controller 65. The A/D converter 61, the shading correction unit 62, and the MTF and gamma correction unit 63 perform image processing. The image data is stored in the image memory 66 and HD the 75. The image memory controller 65 controls the image memory 66 and HD the 75. The IPU 40 also includes a print combining unit 71, a print-image data generator (printing unit) 76, and a variable magnification circuit 77 in order to print the image data. A selector 64 which switch a destination of the image data is provided among the MTF and gamma correction unit 63, the print combining unit 71, and the image memory controller 65.

The CCD image sensor 54 is provided in the scanner 50 shown in Fig. 2. The writing unit 57 in a plotter 550 is also a unit which writes the image in the photosensitive drum 15 with the laser beam shown in Fig. 2. The writing unit 57 is not provided in the IPU 40, but the writing unit 57 is also shown in Fig. 6 for the sake of convenience. The IPU 40 also includes a CPU 68, a ROM 69, a RAM 73, an NV-RAM 74, and an I/O port 67. The CPU 68 is a central processing unit which entirely controls the units. The ROM 69 is a program memory, the RAM 73 is a data memory, and the NV-RAM 74 which is a non-volatile memory functions as a restricted information storage unit. The I/O port 67 is connected to the outside to receive and transmit the data. The CPU 68, the ROM 69, the RAM 73, the NV-RAM 74, and the I/O port 67 are connected to the image memory controller 65 through a CPU bus 72 including an address bus, a data bus, and a control bus (not shown).

The CPU 68 is connected to the print-image data generator 76 and the IF (I/O port) 204 of the main controller 20 shown in Fig. 4 through the bus including the address bus, the data bus, and the control bus (not shown). The CPU 68 has a function of performing the setting to the image memory controller 65 and a function of controlling the scanner 50 and writing unit 57 shown in Fig. 2.

The imaging light is reflected from the original surface which is irradiated with the light emitted from the exposure lamp 51 of the scanner 50 shown in Fig. 2, and photoelectric conversion is performed to the imaging light to obtain an image signal by the CCD image sensor 54. The image signal is converted into a digital signal to obtain the image data by the A/D converter 61. After the shading correction unit 62 performs shading correction to the image data, the MTF and gamma correction unit 63 perform MTF correction and gamma correction to the image data. Then, the selector 64 supplies the image data to the image data print combining unit 71 or the image memory controller 65 by switching the selector 64.

The print-image data generator 76 is connected to the CPU bus 72 to generate print image data such as page printing character image data and arbitrary stamping image data. The print image data generated by the print-image data generator 76 is input to the print combining unit 71, and arbitrary print image data can be combined with the image data transmitted to the print combining unit 71 from the selector 64. The combined image data is extended or contracted according to a variable magnification ratio specified through the variable magnification circuit 77, and the image data is transmitted to the writing unit 57, which allows the print image to be added to each transfer paper. Only the print image data generated by the print-image data generator 76 can be transmitted to the writing unit 57 of the plotter 550 through the print combining unit 71 and the variable magnification circuit 77.

On the other hand, a configuration in which the image data can bi-directionally be input and output is formed between the image memory controller 65 and the selector 64. Although not specified clearly in Fig. 6, The IPU 40 has a function of selecting the input and output of plural pieces of data in addition to the image data input from the scanner 50 so as to be able to process the image data supplied from the external device through the I/O port 67 (network I/F) functioning as the image transmission unit and image reception unit, i.e., the data input from the external data processing device such as a personal computer. In the embodiment, as shown in Fig. 1, the digital multi function peripheral 1 is connected to the network N through the I/O port 67. For example, a TCP/IP communication protocol which is widely used as a standard protocol of the Internet is used as a communication unit of the digital multi function peripheral 1.

The digital multi function peripheral 1 has the network configuration shown in Fig. 1. The digital multi function peripheral 1 transmits and receives device configuration information, the operating status, a control command such as a remote output command, and a setting command to and from the devices A to E connected to the network N, and the digital multi function peripheral 1 transmits and receives the image data and destination address book data to and from the external server. The CPU 68 writes and read the image data in and from the image memory 66 through the image memory controller 65. The image data transmitted to the image memory controller 65 is compressed by an image compression device in the image memory controller 65. Then, the compressed image data is transmitted to the image memory 66, and the compressed image data is stored in the image memory 66.

Although the 256-gray scale level image data having the maximum image size can directly be written in the image memory 66, because larger capacity of the image memory 66 is required to store the original image data of one sheet, the large number of images cannot be stored in the image memory 66. This is because the image data is compressed. Therefore, the restricted storage capacity of the image memory 66 can effectively be utilized by the image compression. Because the large amount of original image data can be stored once, the stored pieces of original image data can be output in the order of the page as a sorting function. In this case, the data read from the image memory 66 in outputting the image is output to the selector 64 while sequentially expanded by an expansion device in the image memory controller 65, and the data is transmitted to the print combining unit 71 from the selector 64. The above function is called "electronic sort."

The original images of the plural sheets can also sequentially be read in area, into which an area of the image memory 66 for the one sheet of transfer paper is divided, by utilizing the function of the image memory 66. For example, the original images of four sheets are sequentially written in the quarter areas of the image memory 66 for the one sheet of transfer paper, which allows the original images of four sheets to be combined in the image of the one sheet of transfer paper to obtain the aggregated copy output. The above function is called "aggregation copy." The image data stored in the image memory 66 is configured such that the CPU 68 can obtain access to the image data. Therefore, contents of the image data stored in the image memory 66 can be processed. For example, an image skipping process and an image clipping process can be performed. The image data stored in the image memory 66 is processed by writing the image data in a register of the image memory controller 65. The processed image is retained by the image memory 66 again.

The image memory 66 is configured such that the image data to be processed is divided into plural areas according to a size of the image data to be able to input and output the image data at the same time. In order to be able to input and output the image data to the divided areas in parallel, the image memory 66 is connected to the interface to the image memory controller 65 by two sets of read address data lines and write address data lines. Therefore, the operation can be performed such that the image data is output (read) from one area while the image data is input (written) in the other area.

In order to store the large amount of image data, the hard disk (HD) 75 is separately provided as the image memory. The use of the HD 75 has an advantage that the image can be permanently retained with no external power supply. The HD 75 is used to read and retain plural stereotyped original (format original) images with the scanner 50. The HD 75 is also utilized in a data encoding process when the image data read by the scanner 50 is delivered to the outside by utilizing an electronic mail, or in a series of operations such as storage, edit, and delete of an address book having mail addresses.

In the apparatus main body 1A shown in Fig. 2, the read image data is temporarily stored in the image memory 66 to absorb a difference between an image forming speed by the plotter 550 including the writing unit 57 and an original image read processing speed by the scanner 50. When the image data is transmitted from the external image storage device to the writing unit 57, the image data is temporarily stored in the image memory 66, and then the image data is read and transmitted to the writing unit 57. Thus, for the input and output of the image stored in the image memory 66 and HD 75, the image read by the scanner 50, and the image transmitted to the writing unit 57, an image path (image transfer path) is determined by the image memory controller 65. The CPU 68 determines the input and output of the image data to be able to switch an image flow by the image memory controller 65 connected to the CPU 68.

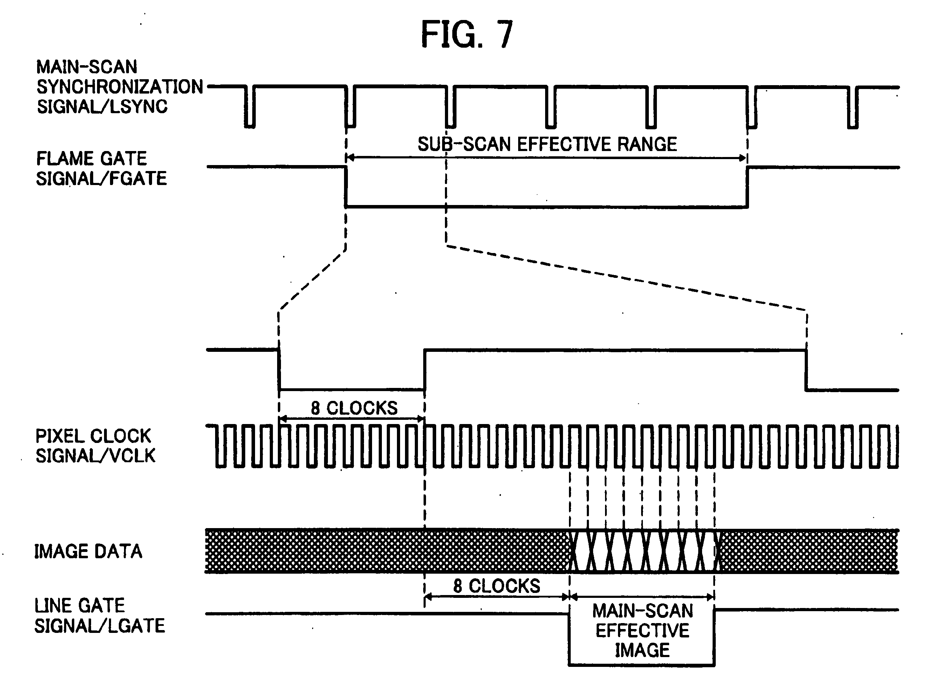

Then, the image data and a control signal of one page in the selector 64 will be described with reference to Fig. 7. Fig. 7 is a timing chart of an example of the image data and the control signal of one page in the selector 64. In Fig. 7, the sign /FGATE ("/" indicates low active) designates a flame gate signal, and the sign /FGATE designates an effective period in a sub-scan direction of the image data of one page. The sign /LSYNC designates a main-scan synchronization signal in each one line. The image data is enabled at predetermined clocks after the main-scan synchronization signal rises.

The sign /LGATE designates a line gate signal, and the sign /LGATE designates an effective period in a main-scan direction of the image data. These signals are synchronized with an image clock signal VCLK (pixel synchronization signal), and the one-pixel and eight-bit data (256 gray scale levels) is transmitted for one period of the image clock signal VCLK. In the digital multi function peripheral 1, write density into the transfer paper is 400 dpi, the maximum number of pixels is 4800 pixels in the main-scan direction, and the maximum number of pixels is 6800 pixels in the sub-scan direction. It is assumed that the image data becomes a white image as the gray scale level is brought close to "255."

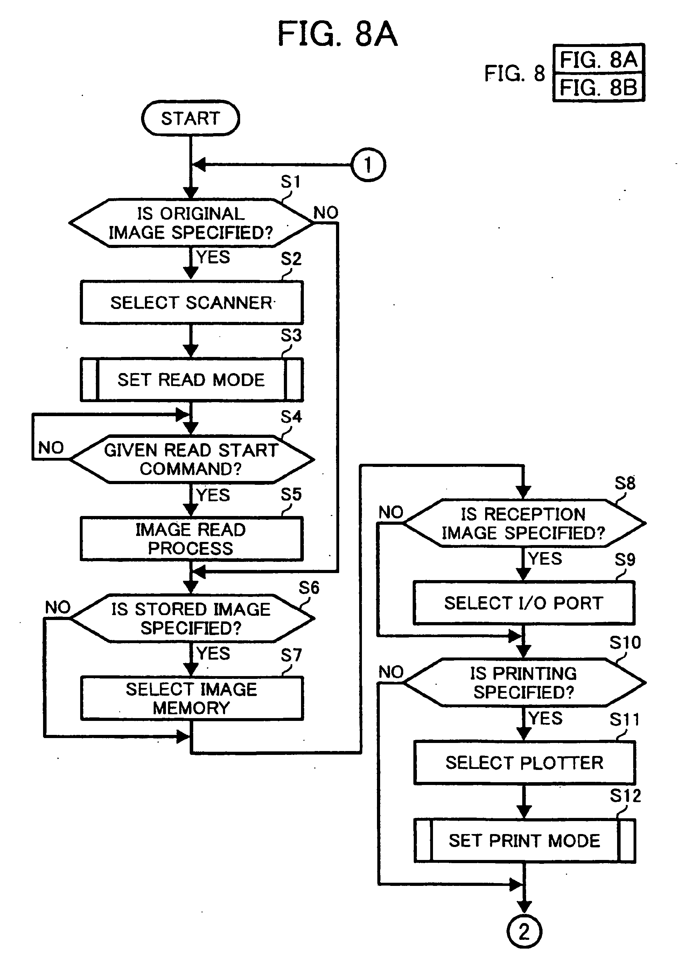

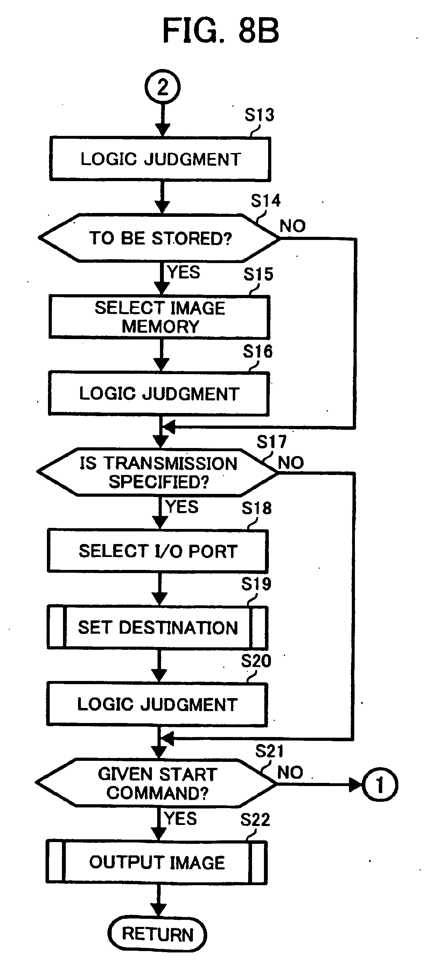

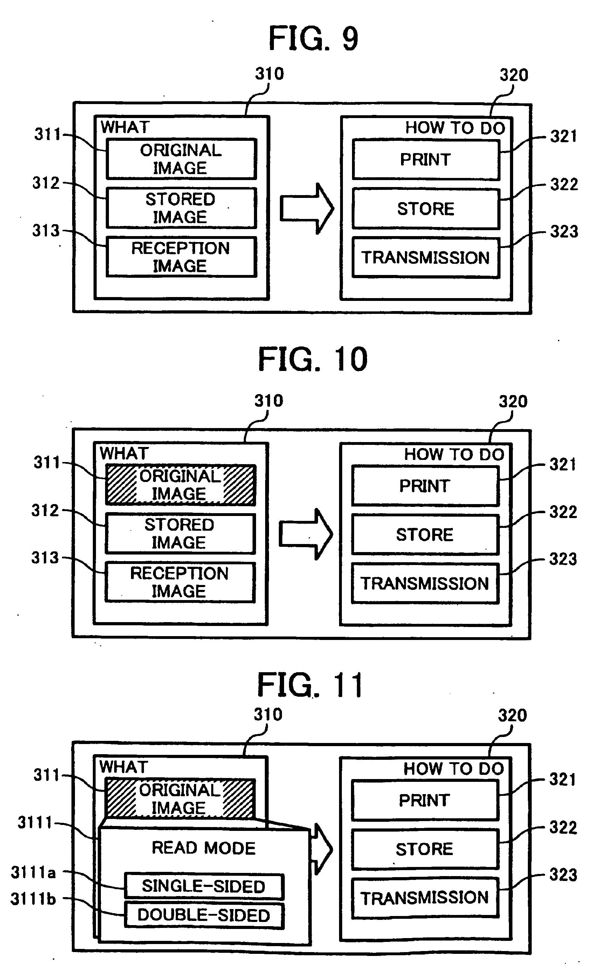

The configuration of a feature portion of the invention and plural examples having different functions in the digital multi function peripheral 1 will be described below. A first example will be described below. Fig. 8 is a flowchart of the first example of control (image output control) according to the invention performed by the main controller 20 of the digital multi function peripheral 1. Figs. 9 to 15 show different examples of an operation screen of the liquid crystal touch panel 31 for explaining an operation procedure when a required image to be processed is output from the digital multi function peripheral 1 by the user operation. The function key marked with diagonal lines indicates reverse monochrome display.

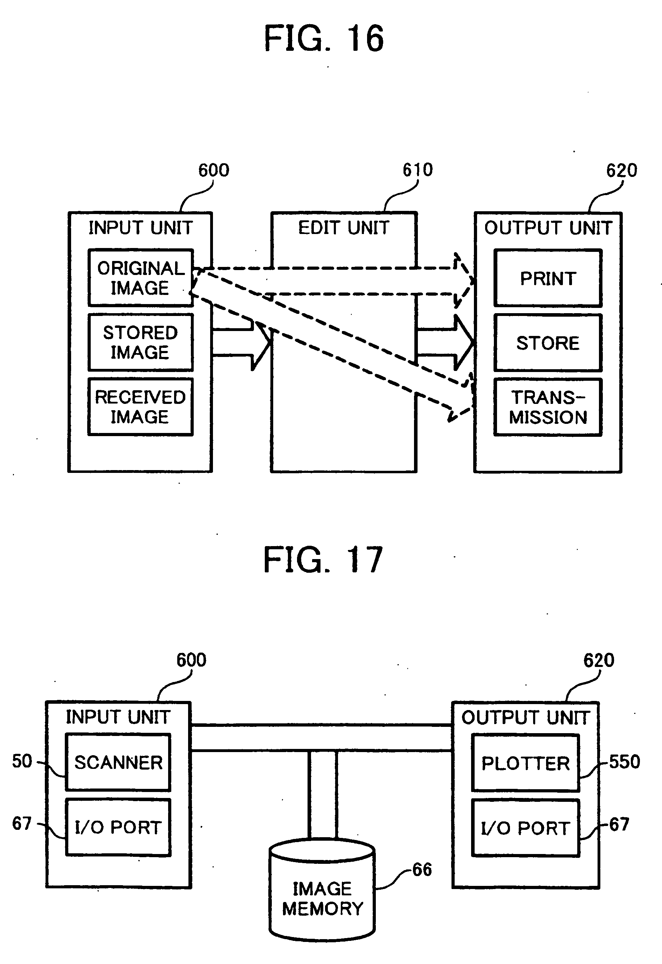

Fig. 16 is a functional block diagram of a main part according to the invention along with an image transfer path when a control system of the digital multi function peripheral 1 is seen from the viewpoint of user. Fig. 17 is a functional block diagram of a main part according to the invention when the control system of the digital multi function peripheral 1 is seen from the viewpoint of system. As shown in Figs. 16 and 17, the digital multi function peripheral 1 includes an input unit 600, an edit unit 610, and an output unit 620.

In the input unit 600, the scanner 50, the image memory 66, and the I/O port (network I/F) 67 can serve as input functions (functions as the image input unit) of the original image, the stored image, and the reception image. In the edit unit 610, the image processing unit 40 and the scanner 50 can serve as edit processing functions of these images (input images). In the output unit 620, the plotter 550, the image memory 66, and the I/O port 67 can serve as output functions (functions as the image output unit) of the input image (including the image to which the edit process is performed). In the first example, the edit process (process concerning an edit mode) performed by the edit unit 610 will be omitted.

As shown in Fig. 9, at predetermined timing such as power-on timing, the main controller 20 of the digital multi function peripheral 1 displays an operation screen (initial screen) including the input image specifying unit 310 and an output form specifying unit 320 on the liquid crystal touch panel 31 of the operation unit 30 of Fig. 3. Then, a processing routine shown in Fig. 8 is started when any one of function keys on the operation screen is pressed down, namely, when any one of the original image key 311, the stored image key 312, and a reception image key 313 of the input image specifying unit 310 and the print key 321, the store key 322, and the transmission key 323 of the output form specifying unit 320 is pressed down.

When the pressed-down function key is the original image key 311 on the input image specifying unit 310, it is determined in Step S1 that the original image is specified as the input image, and the scanner 50 of Fig. 2 is selected in Step S2. When the original image key 311 is pressed down, the monochrome display of the original image key 311 is reversed as shown in Fig. 10 (shown by oblique lines). Then, a read mode setting process is performed in Step S3.

For example, when the original image key 311 is pressed down again, a read mode setting unit 3111 including a single-sided key 3111a and a double-sided key 3111b is displayed on the operation screen as shown in Fig. 11. When either of the function keys is pressed down, a read mode corresponding to the pressed-down function key is set. That is, a single-sided read mode in which only the image in the single surface of the original is read is set when the single-sided key 3111a is pressed down, and a double-sided read mode in which the images in both the surfaces of the original are read is set when the double-sided key 3111b is pressed down. However, when the double-sided read mode is set, it is necessary to set the original on the original plate 2 of ADF 1B of Fig. 2.

When a user sets the original on the contact glass 6 of Fig. 2 or on the original plate 2 of ADF 1B, the setting of the original is detected by an original size detection sensor (not shown) placed below the contact glass 6 or by the original setting detection sensor 7 of Fig. 2, and thereby it is determined in Step S4 that the read start is directed (it may be determined that the read start is directed when the user operates a read start key). In Step S5, an original reading process is started, the scanner 50 is caused to read the original image, and the image memory 66 stores the original image as shown in Fig. 17. When the original is set on the original plate 2 of ADF 1B, as described above, the process in which the original is automatically fed and set on the contact glass 6 is repeated until the original does not exist on the original plate 2, the scanner 50 is caused to read the original image at each time when the original is set on the contact glass 6, and the image memory 66 stores the original image.

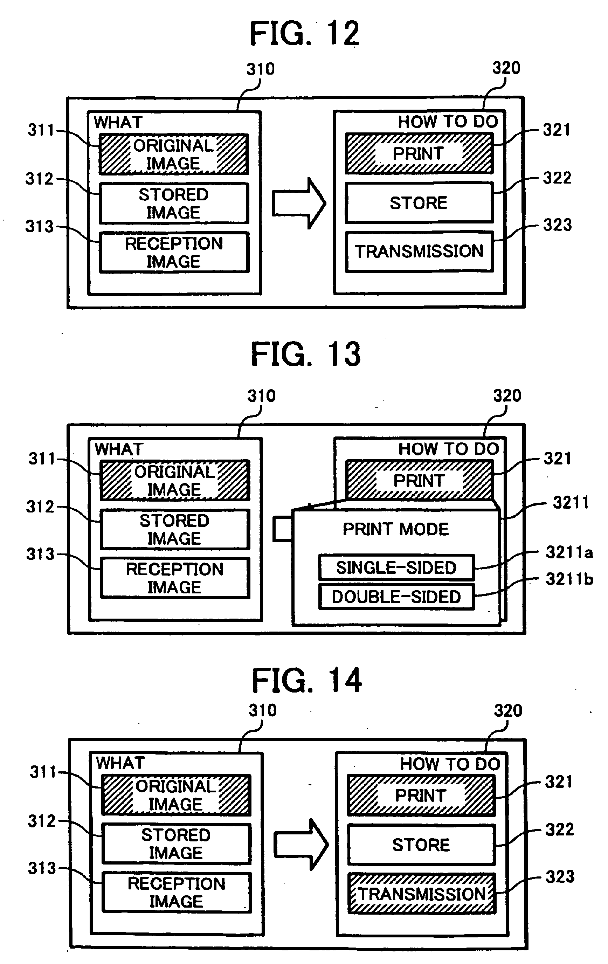

When the pressed-down function key is the stored image key 312 on the input image specifying unit 310, it is determined in Step S6 that the stored image is specified as the input image, and the image memory 66 of Fig. 6 is selected in Step S7. When the pressed-down function key is the reception image key 313 on the input image specifying unit 310, it is determined in Step S8 that the reception image is specified as the input image, and the I/O port 67 of Fig. 6 is selected in Step S9. When the pressed-down function key is the print key 321 on the output form specifying unit 320, it is determined in Step S10 that the print output is specified as the output form, and the plotter 550 of Fig. 6 is selected in Step S11. When the print key 321 is pressed down, the monochrome display of the print key 321 is reversed as shown in Fig. 12.

Then, a print mode setting process is performed in Step S12. For example, when the print key 321 is pressed down again, a print mode setting unit 3211 including a single-sided key 3211a and a double-sided key 3211b is displayed on the operation screen as shown in Fig. 13. When either of the function keys is pressed down, a print mode corresponding to the pressed-down function key is set. That is, a single-sided print mode in which only the image is printed in the single surface of the transfer paper is set when the single-sided key 3211a is pressed down, and a double-sided print mode in which the images are printed in both the surfaces of the transfer paper is set when the double-sided key 3211b is pressed down.

When the print mode setting process is ended, a logic judgment process is performed in Step S13. When the original image is specified as the input image, because the scanner 50 and the plotter 550 are selected, an image transfer path is determined such that the print output of the original image (original image in the image memory 66) read by the scanner 50 can be performed by the plotter 550. When the pressed-down function key is the store key 322 on the output form specifying unit 320, it is determined in Step S14 that storing is specified as the output form, and the image memory 66 is selected in Step S15. Then, the logic judgment process is performed in Step S16 (update is performed when the logic judgment process is already performed in Step S13).

When the original image is specified as the input image, because the scanner 50 and the image memory 66 are selected, the image transfer path is determined such that the original image read by the scanner 50 can be input to the image memory 66. When the original image is specified as the input image, because the scanner 50 is already selected to start the storing of the original image into the image memory 66, it is not necessary to perform the logic judgment process of Step S16. When the original image is specified as the input image and, at the same time, when the print output is also specified as the output form in addition to storing the image, because the scanner 50, the plotter 550, and the image memory 66 are selected, the image transfer path is determined such that the image read by the scanner 50 can be input to both the plotter 550 and the image memory 66. When the original image is specified as the input image, because storing of the original image into the image memory 66 is already started, it is not necessary to include the image transfer path between the scanner 50 and the image memory 66. When the pressed-down function key is the transmission key 323 on the output form specifying unit 320, it is determined in Step S17 that the transmission is specified as the output form, and the I/O port 67 is selected in Step S18. When the transmission key 323 is pressed down, the monochrome display of the transmission key 323 is reversed as shown in Fig. 14.

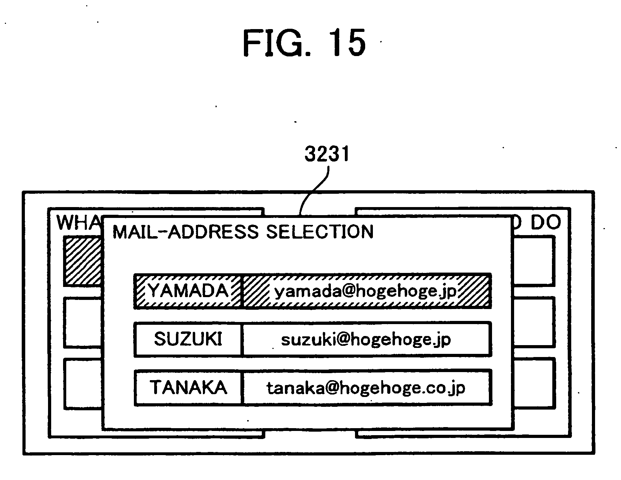

Then, a destination setting process is performed in Step S19. For example, when the transmission key 323 is pressed down again, a destination specifying unit 3231 including plural previously registered destinations (addresses) is displayed on the operation screen as shown in Fig. 15. When any one of the destinations is pressed down, the pressed-down destination is set. The new destination can also be input and set. In Fig. 15, e-mail addresses are displayed as the plural destinations constituting the destination specifying unit 3231. However, other destinations such as a FAX number may be displayed, or various destinations such as the e-mail address and the Fax number may be displayed in a collective manner.

Then, the logic judgment process is performed in Step S20 (update is performed when the logic judgment process is already performed in Steps S13 or S16). When the original image is specified as the input image, because the scanner 50 and the I/O port 67 are selected, the image transfer path is determined such that the original image read (original image in the image memory 66) by the scanner 50 can be input to the I/O port 67. When the stored image is specified as the input image, because the image memory 66 and the I/O port 67 are selected, the image transfer path is determined such that the image in the image memory 66 can be input to the I/O port 67.

When the original image is specified as the input image and, at the same time, when the print output is also specified as the output form in addition to the transmission, because the scanner 50, the plotter 550, and the I/O port 67 are selected, the image transfer path is determined such that the original image (original image in the image memory 66) read by the scanner 50 can be input to both the plotter 550 and the I/O port 67. When the original image is specified as the input image and, at the same time, when storing is also specified as the output form in addition to the transmission, because the scanner 50, the image memory 66, and the I/O port 67 are selected, the image transfer path is determined such that the original image read by the scanner 50 can be input to both the image memory 66 and the I/O port 67. When the original image is specified as the input image, because storing of the original image into the image memory 66 is already started, it is not necessary to include the image transfer path between the scanner 50 and the image memory 66.

Then, when the start key 33 of Fig. 3 is pressed down, it is determined in Step S21 that a start direction is issued, and the image output process is performed based on the logic judgment process in Step S22. In the logic judgment process, when the image transfer path is determined such that the original image read by the scanner 50 can be input to both the plotter 550 (print output) and the I/O port 67 (transmission) as shown in Fig. 16, as shown in Fig. 17, while the original image read by the scanner 50 is read from the image memory 66 and the original image is transferred to the plotter 550 to perform the print output, the original image is transmitted (delivered) from the I/O port 67 to the previously set destination through the network N, e.g., to the personal computer A or B through the e-mail.

When the image transfer path is determined such that the original image read by the scanner 50 can be input to both the image memory 66 and the plotter 550, because the original image read by the scanner 50 is already stored in the image memory 66, while the original image is maintained in the stored state, the original image is read and the original image is transferred to the plotter 550 to perform the print output. When the image transfer path is determined such that the image in the image memory 66 can be input to both the plotter 550 and the I/O port 67, while the image in the image memory 66 is read and transferred to the plotter 550 to perform the print output, the image is transmitted to the previously set destination from the I/O port 67 through the network N.

When the image transfer path is determined such that the original image read by the scanner 50 can be input to the plotter 550, the original image read by the scanner 50 is read from the image memory 66, and the original image is transferred to the plotter 550 to perform the print output. When the image transfer path is determined such that the original image read by the scanner 50 can be input to the image memory 66, because the original image read by the scanner 50 is already stored in the image memory 66, the original image is maintained in the stored state. When the image transfer path is determined such that the original image read by the scanner 50 can be input to the I/O port 67, the original image read by the scanner 50 is read from the image memory 66, and the original image is transmitted from the I/O port 67 to the previously set destination through the network N.

In Fig. 8, the process is simplified for convenience of explanation in the case where the pressed-down function key is the stored image key 312 on the input image specifying unit 310. However, for example, when the stored image key 312 is pressed down again, an image specifying unit including plural function keys (image specifying keys) corresponding to the images in the image memory 66 is displayed on the operation screen and, when any one of the function keys is pressed down, a process can be added such that the image corresponding to the function key is selected as the output image. The same holds true for the later-mentioned second and third examples.

According to the first example, the main controller of the digital multi function peripheral determines the image transfer path while selecting the necessary image input unit and image output unit from the scanner, the image memory, the I/O port (network I/F), and the plotter, which are of the image input unit or image output unit, according to the combination of the input image and output form specified by the simple key operation on the operation screen. Then, the required processed images are output using the selected image input unit and image output unit based on the determined image transfer path.

For example, when the original image is specified as the input image, the scanner is selected as the image input unit to read the original image, and the original image is stored in the image memory. After the process is started, when either the print output or the transmission is specified as the output form, the image transfer path is determined while either the plotter or the I/O port is selected as the image output unit, and the print output of the original image in the image memory is performed through the determined image transfer path by the plotter, or the original image is transmitted to the external device by the I/O port. When both the print output and the transmission are specified as the output form, the image transfer path is determined while both the plotter and the I/O port are selected as the image output unit, the print output of the original image in the image memory is performed through the determined image transfer path by the plotter, and the original image is transmitted to the external device by the I/O port.

Thus, the required processed images can be output from the digital multi function peripheral by the simple operation of the user. That is, the operation becomes simplified when the required processed images are output from the digital multi function peripheral, and the usability of the digital multi function peripheral is improved. When the original image is specified as the input image, because the scanner is caused to read the original image to store the original image in the image memory, the user can determine the output form of the original image after the original image is stored. Therefore, a possibility that the unintended image is mistakenly output is lessened. Furthermore, when the original image which is already output once is output in the same output form or in another output form, because it is not necessary to read the original image by the scanner again, the operational efficiency is also improved.

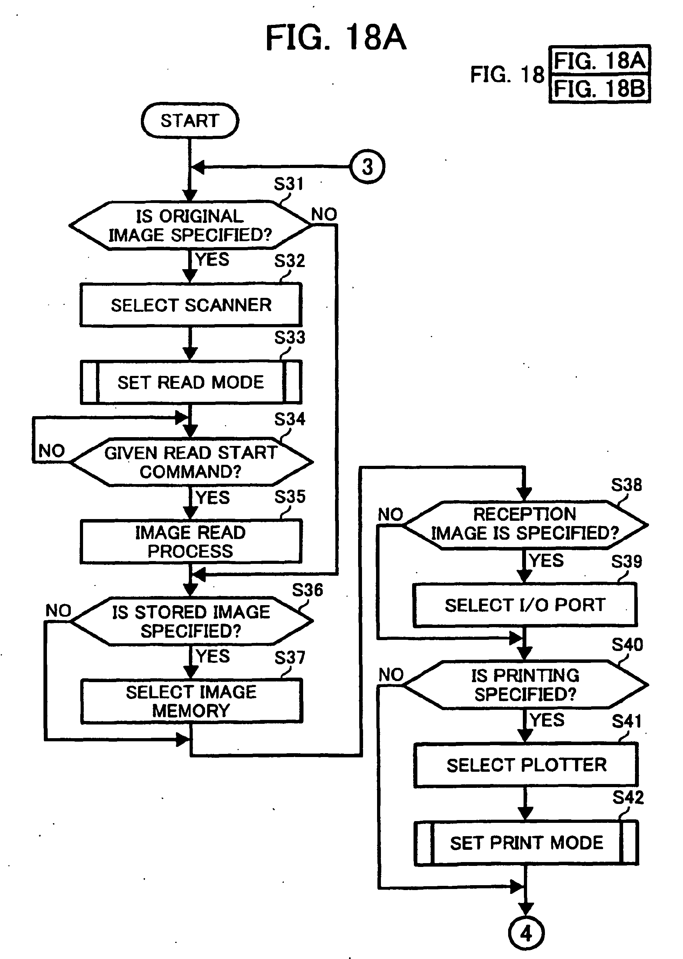

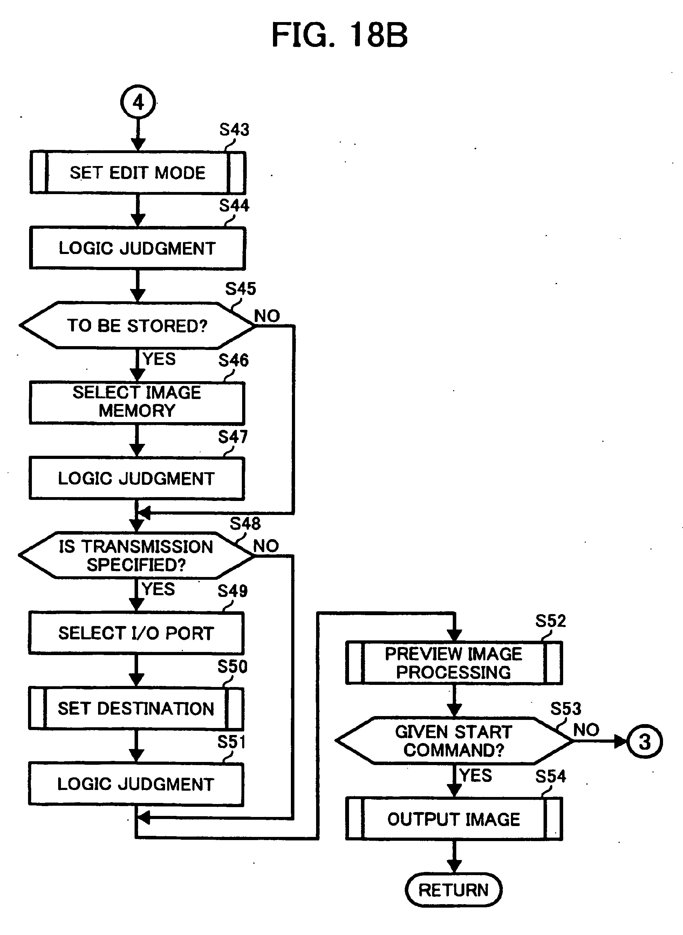

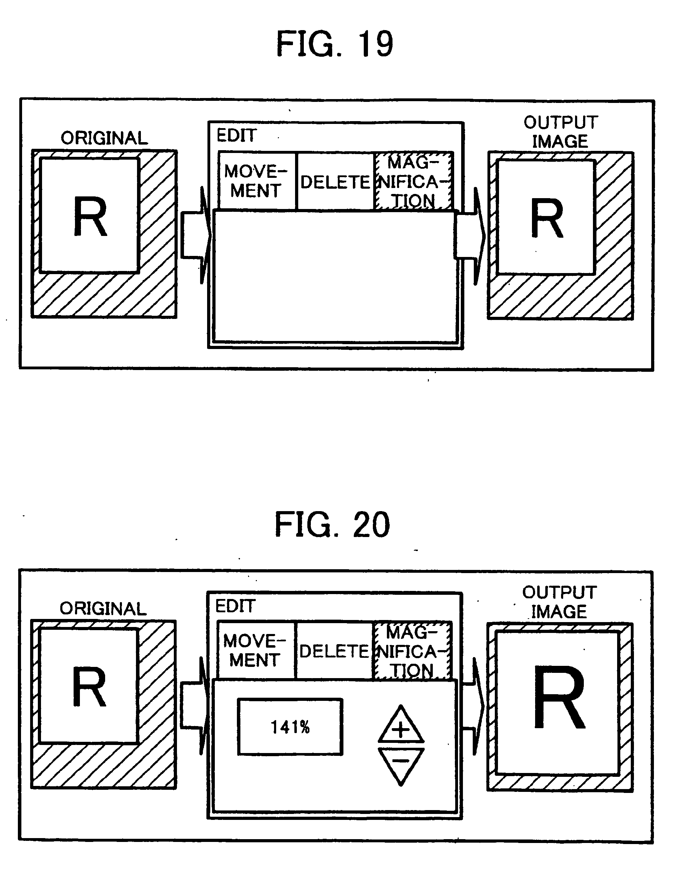

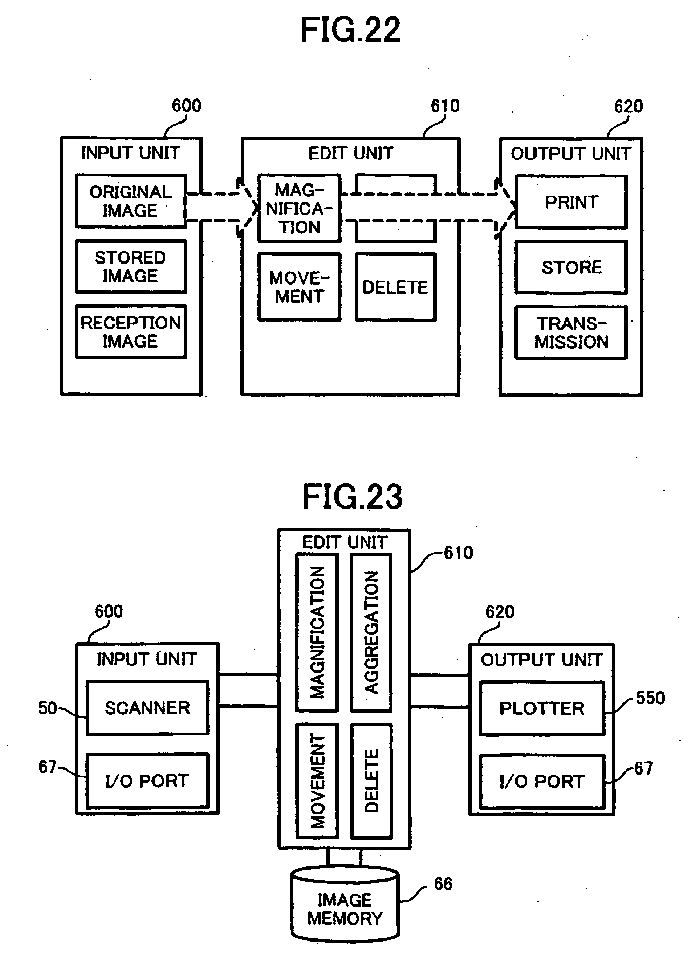

A second example will be described below. Fig. 18 is a flowchart of a second example of the control (image output control) according to the invention performed by the main controller 20 of the digital multi function peripheral 1. Figs. 19 to 21 show different examples of a preview image displayed on the liquid crystal touch panel 31 when one original image is read with the scanner 50. Fig. 22 is a functional block diagram showing another configuration of the main part according to the invention along with an image transfer path when the control system of the digital multi function peripheral 1 is seen from the viewpoint of user. In Fig. 22, the same component as that of Fig. 16 is designated by the same numeral.

Fig. 23 is a functional block diagram showing another configuration of the main part according to the invention when the control system of the digital multi function peripheral 1 is seen from the viewpoint of system. In Fig. 23, the same component as that of Fig. 17 is designated by the same numeral. In the second example, the operation screen displayed on the liquid crystal touch panel 31 is substantially similar to the first embodiment. Therefore, the second example will be described with reference to Figs. 9 to 15. In the second embodiment, the edit process (process concerning the edit mode) by the edit unit 610 and preview image processing are added to the first embodiment which is described with reference to Figs. 8 and the like. Therefore, the processes from Step S40 of Fig. 18 including the edit process and preview image processing will be described.

When the pressed-down function key is the print key 321 on the output form specifying unit 320, the main controller 20 of the digital multi function peripheral 1 determines that the print output is specified as the output form in Step S40, and the main controller 20 selects the plotter 550 in Step S41. Then, the main controller 20 performs the print mode setting process in Step S42, and the main controller 20 performs an edit mode setting process in Step S43. For example, when the print key 321 is pressed down again, an edit mode setting unit (not shown) is displayed in addition to the print mode setting unit 3211 including the single-sided key 3211a and the double-sided key 3211b on the operation screen as shown in Fig. 13. When either of the function keys on the print mode setting unit 3211 is pressed down, the print mode corresponding to the pressed-down function key is set.

When any one of the function keys on the edit mode setting unit is pressed down, an edit unit 610 is selected, the edit mode corresponding to the pressed-down function key is set to select the corresponding processing unit in the edit unit 610, and edit contents are set by predetermined key operation. That is, when the pressed-down function key is a variable magnification key, it is determined that a variable magnification mode is specified, the variable magnification mode is set to select a variable magnification processing unit in the edit unit 610, and a variable magnification ratio is set in the case where the variable magnification ratio is specified by predetermined key operation. When the pressed-down function key is a aggregation key, it is determined that a aggregation mode is specified, the aggregation mode is set to select an aggregation processing unit in the edit unit 610, and the number of sheets of the aggregation is set in the case where the number of sheets of the aggregation is specified by predetermined key operation. When the pressed-down function key is a movement key, it is determined that a movement mode is specified, the movement mode is set to select a movement processing unit in the edit unit 610, and a movement point is set in the case where the movement point is specified by predetermined key operation. When the pressed-down function key is a delete key, it is determined that a delete mode is specified, the delete mode is set to select a delete processing unit in the edit unit 610, and a delete position is set in the case where the delete position is specified by predetermined key operation. The setting contents (information) of the edit mode are displayed on the operation screen.

When the print mode setting process and the edit mode setting process are ended, the logic judgment process is performed in Step S44. When the original image is specified as the input image and, at the same time, when the edit mode is set, because the scanner 50, the processing unit (edit unit) corresponding to the edit mode set in the edit unit 610, and the plotter 550 are selected, the image transfer path is determined such that the plotter 550 can perform the print output of the original image (original image in the image memory 66) read by the scanner 50 while the processing unit corresponding to the edit mode set in the edit unit 610 can perform the edit process to the original image.

When the pressed-down function key is the store key 322 on the output form specifying unit 320, it is determined in Step S45 that storing is specified as the output form, and the image memory 66 is selected in Step S46. Then, in Step S47, the logic judgment process is performed (the update is performed when the logic judgment process is already performed in Step S44).

That is, when the original image is specified as the input image, because the scanner 50 and the image memory 66 are selected, the image transfer path is determined such that the original image read by the scanner 50 can be input to the image memory 66. When the original image is specified as the input image, when the print output is also specified as the output form in addition to storing the image, and when the edit mode is set at the same time, because the scanner 50, the processing unit corresponding to the edit mode set in the edit unit 610, the plotter 550, and the image memory 66 are selected, the image transfer path is determined such that the original image read by the scanner 50 can be input to both the image memory 66 and the plotter 550 and, at the same time, such that the processing unit corresponding to the edit mode set in the edit unit 610 can perform the edit process to the image input to the plotter 550.

When the pressed-down function key is the transmission key 323 on the output form specifying unit 320, it is determined in Step S48 that the transmission is specified as the output form, and the I/O port 67 is selected in Step S49. Then, the destination setting process is performed in Step S50, and the logic judgment process is performed in Step S51 (the update is performed when the logic judgment process is already performed in Step S44 or S47).

That is, when the original image is specified as the input image and, at the same time, when the edit mode is set, because the scanner 50, the processing unit corresponding to the edit mode set in the edit unit 610, and the I/O port 67 are selected, the image transfer path is determined such that the processing unit corresponding to the edit mode set in the edit unit 610 can perform the edit process to the original image (original image in the image memory 66) read by the scanner 50 to input the original image to the I/O port 67. When the stored image is specified as the input image and, at the same time, when the edit mode is set, because the processing unit corresponding to the edit mode set in the edit unit 610, the image memory 66, and the I/O port 67 are selected, the image transfer path is determined such that the processing unit corresponding to the edit mode set in the edit unit 610 can perform the edit process to the image in the image memory 66 to input the image to the I/O port 67.

When the original image is specified as the input image, when the print output is also specified as the output form in addition to the transmission, and when the edit mode is set at the same time, because the scanner 50, the processing unit corresponding to the edit mode set in the edit unit 610, the plotter 550, and the I/O port 67 are selected, the image transfer path is determined such that the processing unit corresponding to the edit mode set in the edit unit 610 can perform the edit process to the original image (original image in the image memory 66) read by the scanner 50 to input the original image to both the plotter 550 and the I/O port 67. When the original image is specified as the input image, when storing is also specified as the output form in addition to the transmission, and when the edit mode is set at the same time, because the scanner 50, the image memory 66, the processing unit corresponding to the edit mode set in the edit unit 610, the plotter 550, and the I/O port 67 are selected, the image transfer path is determined such that the original image read by the scanner 50 can be input to both the image memory 66 and the I/O port 67 and, at the same time, such that the processing unit corresponding to the edit mode set in the edit unit 610 can edit the image input to the I/O port 67.

When the logic judgment process is performed in Step S44, S47, or S51, the preview image processing in which the preview image is created based on the input image and displayed on the operation screen of the liquid crystal touch panel 31 is performed in Step S52. However, in this case, it is assumed that the preview image (while some original images are skipped) is created based on the original image read by the scanner 50 by specifying the original image as the input image. Although the preview image can obviously be created based on the image in the image memory 66 or on the image received from the external device by the I/O port 67, the description will be omitted here. The same holds true for the later-mentioned third example.

The preview image producing process is performed in parallel with a process of storing the original image read by the scanner 50 in the image memory 66, and the created preview image is stored in a memory (for example, HD 75) different from the image memory 66. Then, the preview image is read and displayed on the operation screen. Alternatively, after the original image read by the scanner 50 is stored in the image memory 66, the stored original image is copied in another area in the image memory 66, and the preview image is created by the original image skipping and displayed on the operation screen.

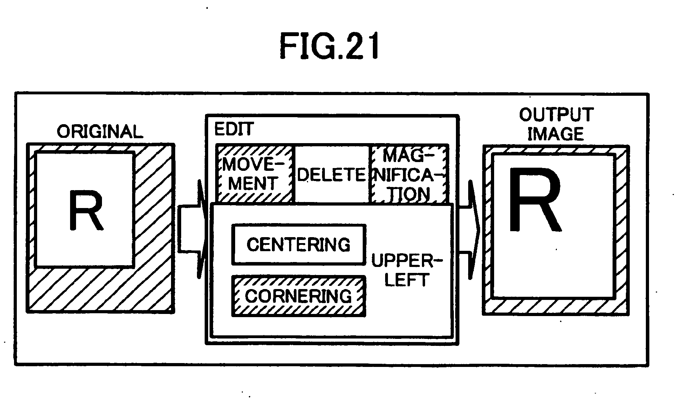

For example, as shown in Fig. 19, the created preview image (output image) is displayed along with the original image. The preview image is corrected according to the result of the logic judgment process of Step S44 at each time when the edit contents of the original image are changed in the edit mode setting process of Step S43, which allows the display of the preview image to be updated in real time. For example, after the preview image is updated in real time as shown in Fig. 20 by the setting of the variable magnification ratio (0%→141%) in the variable magnification mode, the preview image is updated in real time as shown in Fig. 21 by the setting (cornering setting) of the movement point in the movement mode.

The input image such as the original image or the edit image of the input image can be output after the preview image processing of Step S52 is completed. When the start key 33 is pressed down, it is determined in Step S53 that the start direction is issued, and the image output process is performed in Step S54 based on the logic judgment process. However, in this case, it is assumed that the edit mode is already set. In the logic judgment process, when the image transfer path is determined such that the processing unit corresponding to the edit mode set in the edit unit 610 can perform the edit process (for example, the variable magnification process) to the original image read by the scanner 50 to input the original image to the plotter 550 (print output) as shown in Fig. 22, as shown in Fig. 23, the original image read by the scanner 50 is read from the image memory 66, the processing unit corresponding to the edit mode set in the edit unit 610 performs the edit process to the original image, and the original image is transferred to the plotter 550 to perform the print output.

When the image transfer path is determined such that the processing unit corresponding to the edit mode set in the edit unit 610 can perform the edit process to the original image read by the scanner 50 to input the original image to the I/O port 67, the original image read by the scanner 50 is read from the image memory 66, the processing unit corresponding to the edit mode set in the edit unit 610 performs the edit process to the original image, and original image is transmitted from the I/O port 67 to the previously set destination through the network N. When the image transfer path is determined such that the processing unit corresponding to the edit mode set in the edit unit 610 can perform the edit process to the original image read by the scanner 50 to input the original image to both the plotter 550 and the I/O port 67, the original image read by the scanner 50 is read from the image memory 66, the processing unit corresponding to the edit mode set in the edit unit 610 performs the edit process to the original image, and original image is transmitted from the I/O port 67 to the previously set destination through the network N while transferred to the plotter 550 to perform the print output.

When the image transfer path is determined such that the original image read by the scanner 50 can be input to both the image memory 66 and the plotter 550 and, at the same time, such that the processing unit corresponding to the edit mode set in the edit unit 610 can edit the original image input to the plotter 550, because the original image read by the scanner 50 is already stored in the image memory 66, the original image is read while maintained in the stored state, the processing unit corresponding to the edit mode set in the edit unit 610 performs the edit process to the original image, and the original image is transferred to the plotter 550 to perform the print output. When the image transfer path is determined such that the processing unit corresponding to the edit mode set in the edit unit 610 can edit the image in the image memory 66 to input the image to both the plotter 550 and the I/O port 67, the image in the image memory 66 is read, the processing unit corresponding to the edit mode set in the edit unit 610 performs the edit process to the image, and the image is transmitted from the I/O port 67 to the previously set destination through the network N while transferred to the plotter 550 to perform the print output.

According to the second example, the main controller of the digital multi function peripheral determines the image transfer path while selecting the necessary image input unit, image output unit, and edit unit (processing unit) from the scanner, the image memory, the I/O port, the plotter, and the edit unit, which are of the image input unit or image output unit, according to the combination of the input image, output form, and edit mode specified by the simple key operation on the operation screen. Then, the required processed images are output using the selected image input unit, image output unit, and edit unit based on the determined image transfer path. Therefore, the digital multi function peripheral outputs the required processed images to which the edit process is performed.

For example, when the original image is specified as the input image, the scanner is selected as the image input unit to read the original image, and the original image is stored in the image memory. After the process is started, when either the print output or the transmission is specified as the output form and, at the same time, when the edit mode (edit contents) is set, the image transfer path is determined, either the plotter or the I/O port is selected as the image output unit, the processing unit corresponding to the set edit mode is selected as the edit unit, the processing unit corresponding to the set edit mode performs the edit process to the original image in the image memory through the determined image transfer path, and the print output of the original image is performed by the plotter or the original image is transmitted to the external device by the I/O port. When both the print output and the transmission are specified as the output form and, at the same time, when the edit mode is set, the image transfer path is determined, both the plotter and the I/O port are selected as the image output unit while the processing unit corresponding to the set edit mode is selected as the edit unit, the processing unit corresponding to the set edit mode performs the edit process to the original image in the image memory through the determined image transfer path, and the original image is transmitted to the external device by the I/O port while the print output of the original image is performed by the plotter.

Thus, the processed images to which the required edit process is performed can be output from the digital multi function peripheral by the simple operation of the user. That is, the operation becomes simplified when the processed images to which the required edit process is performed are output from the digital multi function peripheral, and the usability of the digital multi function peripheral is improved. When the original image is specified as the input image, because the scanner is caused to read the original image to store the original image in the image memory, the user can determine the output form or edit mode of the original image after the original image is stored. The preview image is created and displayed based on the read original image (other input images can also be used) or the edit image of the original image, and the original image or the edit image thereof is permitted to be output. Therefore, a possibility that the unintended image is mistakenly output is lessened. Furthermore, when the original image which is already output once is output in the same output form or edit mode or in another output form or edit mode, because it is not necessary that the scanner read the original image again, the operational efficiency is also improved.

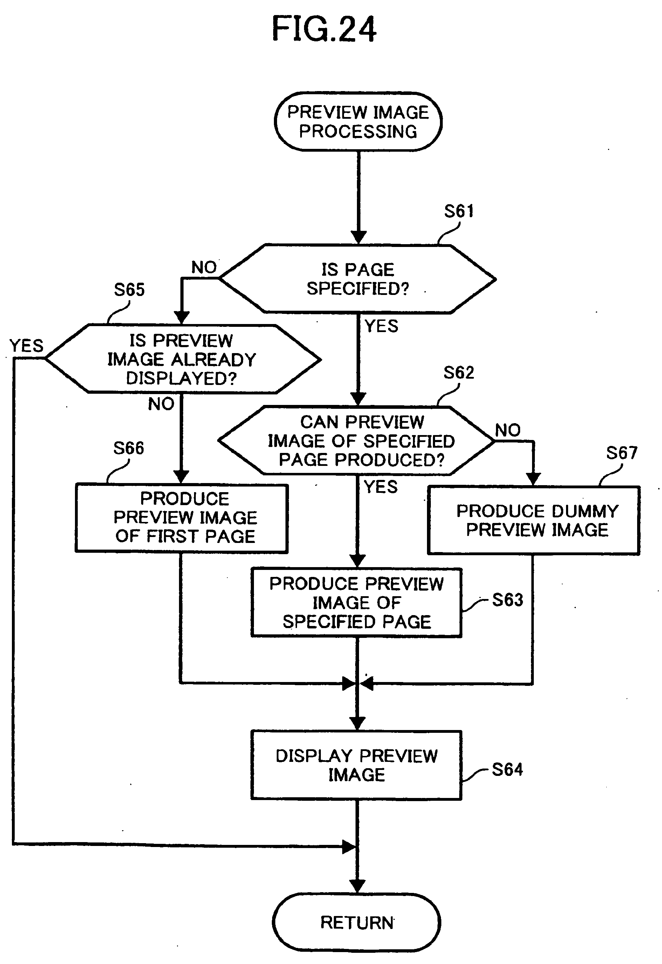

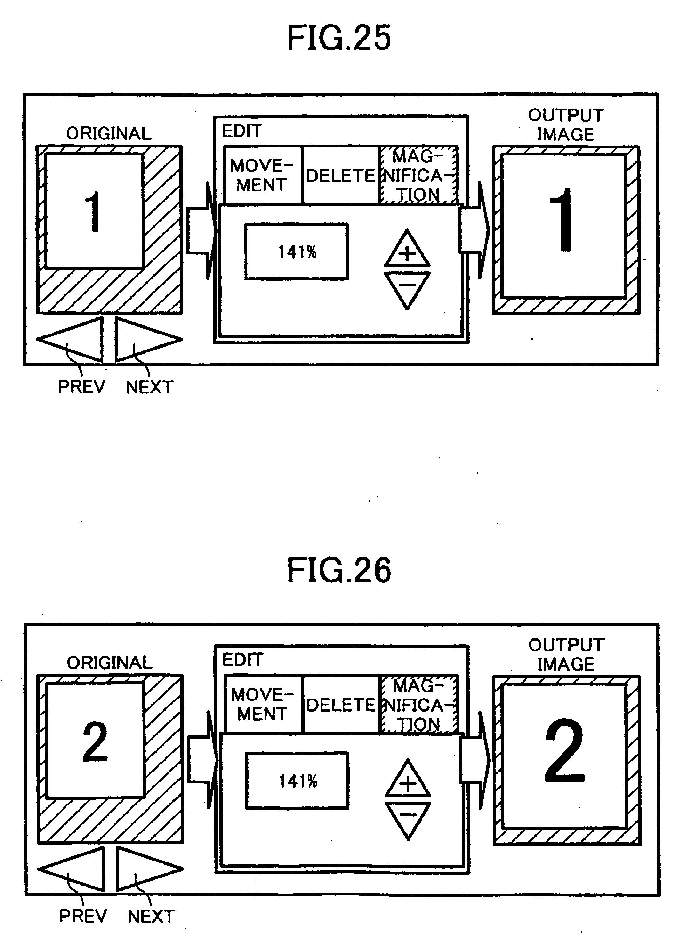

Then, a third example will be described. Fig. 24 is a flowchart of a sub-routine of a preview image process of Step S52 shown in Fig. 18. Figs. 25 to 28 show different examples of the preview image displayed on the liquid crystal touch panel 31 when plural original images are read with the scanner 50. The third example differs from the second example only in the preview image processing, so that the third example will be described with reference to Fig. 18.

The main controller 20 of the digital multi function peripheral 1 performs the preview image processing shown in Fig. 24 in Step S52 of Fig. 18. In Step S61, it is determined whether or not page specification by the key operation exists. When the page specification does not exist, it is determined in Step S65 whether or not the preview image is already displayed on the operation screen. When the preview image is already displayed on the operation screen, the processing routine of Fig. 24 is ended and the flow returns to the processing routine of Fig. 18. When the preview image is not displayed on the operation screen yet, the preview image is created based on the original image of the first page read in Step S66 (with original image skipping), and the preview image is displayed on the operation screen in Step S64.

When the page specification exists, it is determined in Step S62 whether or not the preview image of the specified page can be created. When the preview image can be created, the preview image is created based on the original image of the specified page read in Step S63, and the preview image is displayed on the operation screen in Step S64. When the preview image of the specified page cannot be created, namely, when the original image of the specified page is not read by the scanner 50 yet, a dummy preview image is created in Step S67, and the dummy preview image is displayed on the operation screen in Step S64.

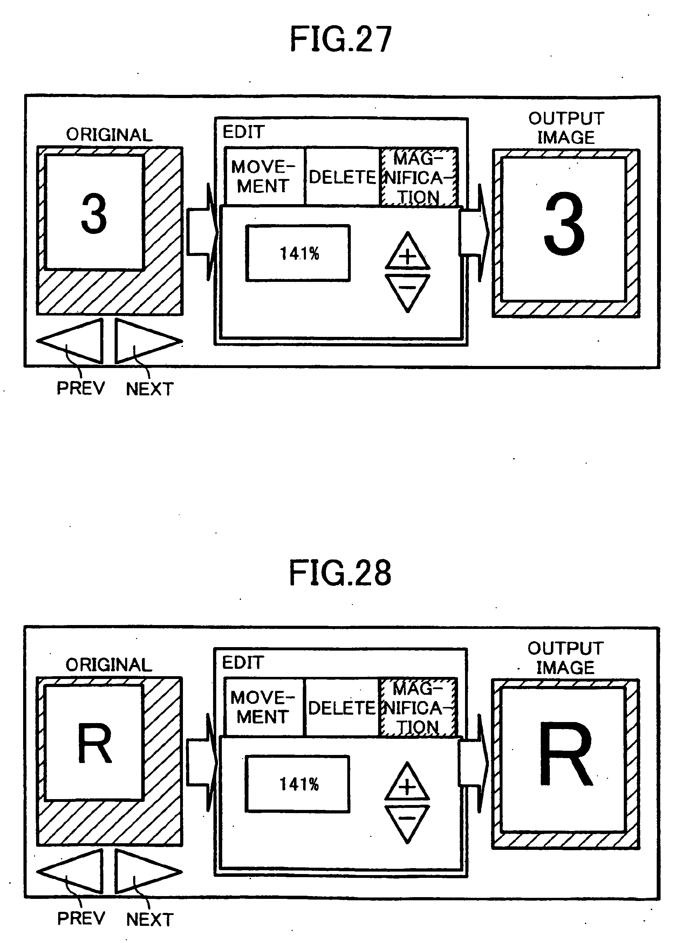

When the edit contents for the original image of the first page are changed in the edit mode setting process in Step S43 of Fig. 18 after the preview image created based on the original image of the first page is displayed on the operation screen, the preview image of the first page is corrected in Step S63 of Fig. 24 according to the result of the logic judgment process of Step S44, and the display of the preview image is updated in real time in Step S64. For example, in the variable magnification mode, the preview image is updated in real time as shown in Fig. 25 by the setting (0%→141%) of the variable magnification ratio. Then, the preview images are sequentially created on the operation screen based on the original images of the second page and third page shown in Figs. 26 and 27 at each time when the user presses down a "Next" key for specifying the page on the operation screen. For example, when the original image of the fourth page is not read yet, the dummy preview image is created as the preview image of the fourth page and displayed on the operation screen as shown in Fig. 28.

According to the third example, similarly to the second example, the processed images to which the required edit process is performed can be output from the digital multi function peripheral by the simple operation of the user. That is, the operation becomes simplified when the processed images to which the required edit process is performed are output from the digital multi function peripheral, and the usability of the digital multi function peripheral is improved. When the original image is specified as the input image, the scanner can sequentially read the plural pages (sheet) of original images to store the original images in the image memory. Therefore, the user can determine the output form or edit mode of the original image of the stored page. Additionally, the preview image is created and displayed based on the original image (other input images can also be used) or the edit image of the original image of the read page, and the original image or the edit image thereof is permitted to be output. Therefore, the following effects are obtained.

That is, a possibility that the plural pages of unintended images are mistakenly output is lessened. Because the preview image cannot be created for the original image of the page which is not read yet, instead the dummy preview image is created and displayed. Therefore, the user can conveniently comprehend the reading state of the original image. Furthermore, when the original image of each page which is already output once is output in the same output form or edit mode or in another output form or edit mode, because it is not necessary that the scanner read the original image again of each page, the operational efficiency is also improved.

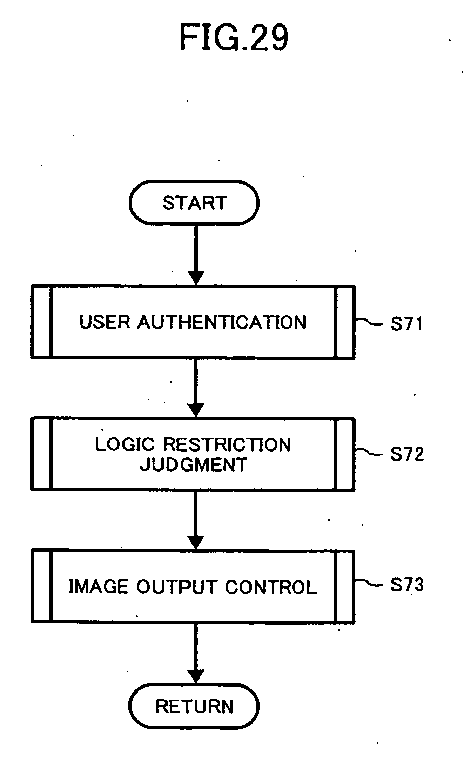

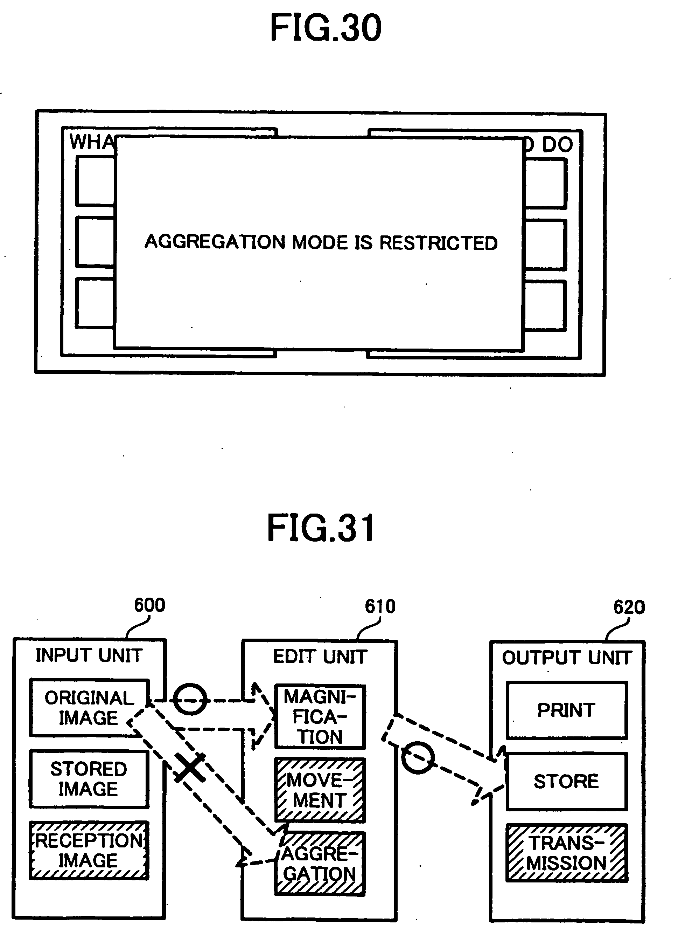

Then, a fourth example will be described. Fig. 29 is a flowchart of a third example of the control according to the invention performed by the main controller 20 of the digital multi function peripheral 1. Fig. 30 shows an operation screen including a message of setting NG (that the aggregation mode cannot be used). Fig. 31 is a functional block diagram showing another configuration of the main part according to the invention along with another image transfer path when the control system of the digital multi function peripheral 1 is seen from the viewpoint of user. In Fig. 31, the same component as that of Fig. 22 is designated by the same numeral.

In the fourth example, new processes such as a user authentication process are added to the third example. Therefore, the fourth example will be described with reference to Fig. 18. In the main controller 20 of the digital multi function peripheral 1, a user ID (user identification information) for individually identifying plural users who can use the digital multi function peripheral 1 and restriction information for indicating enabled/disabled in each image input unit, each image output unit, and each edit mode can be input by the key operation of the operation unit 30 shown in Fig. 3, and each user ID can be stored in the NV-RAM 74 of Fig. 6 in association with the restriction information for indicating enabled/disabled in each image input unit, each image output unit, and each edit mode.

The main controller 20 of the digital multi function peripheral 1 performs the user authentication process in Step S71 at predetermined timing such as power-on timing. That is, the operation screen (user ID input screen) for inputting the user ID is displayed on the liquid crystal touch panel 31 of the operation unit 30. Only when the user ID corresponds to any one of the previously registered user IDs (stored in the NV-RAM 74 of Fig. 6) after the user ID is input by the key operation of the operation unit 30, the use of the digital multi function peripheral 1 is permitted, and the flow goes to Step S72.

A logic restriction judgment process is performed in Step S72. That is, the main controller 20 determines whether each image input unit, each image output unit, and each edit mode are enabled or disabled by comparing the previously input user ID and the restriction information in the NV-RAM 74. Then, the image output control (see Fig. 18) is performed in Step S73. However, in Step S32 of Fig. 18, when the scanner 50 is enabled, the scanner 50 is selected. On the other hand, when the scanner 50 is disabled, the selection of the scanner 50 is prohibited, and the prohibition of the selection of the scanner 50 is displayed on the operation screen.

In Step S37, when the image memory 66 is enabled, the image memory 66 is selected. On the other hand, when the image memory 66 is disabled, the selection of the image memory 66 is prohibited, and the prohibition of the selection of the image memory 66 is displayed on the operation screen. In Step S39, when the I/O port 67 is enabled, the I/O port 67 is selected. On the other hand, when the I/O port 67 is disabled, the selection of the I/O port 67 is prohibited, and the prohibition of the selection of the I/O port 67 is displayed on the operation screen. In Step S41, when the plotter 550 is enabled, the plotter 550 is selected. On the other hand, when the plotter 550 is disabled, the selection of the plotter 550 is prohibited, and the prohibition of the selection of the plotter 550 is displayed on the operation screen.

In Step S43, when the variable magnification mode is specified during the variable magnification mode (variable magnification processing unit in the edit unit 610) is enabled, the variable magnification mode is set to select the variable magnification processing unit. On the other hand, when the variable magnification mode is specified during the variable magnification mode is disabled, the setting of the variable magnification mode (the selection of the variable magnification processing unit) is prohibited, and a message that the use of the variable magnification mode is prohibited is displayed on the operation screen. When the movement mode is specified during the movement mode (movement processing unit in the edit unit 610) is enabled, the movement mode is set to select the movement processing unit. On the other hand, when the movement mode is specified during the movement mode is disabled, the setting of the movement mode (the selection of the movement processing unit) is prohibited, and the message that the use of the movement mode is prohibited is displayed on the operation screen.

When the aggregation mode is specified during the aggregation mode (aggregation processing unit in the edit unit 610) is enabled, the aggregation mode is set to select the aggregation processing unit. On the other hand, when the aggregation mode is specified during the aggregation mode is disabled, the setting of the aggregation mode (the selection of the aggregation processing unit) is prohibited, and the message that the use of the aggregation mode is prohibited is displayed on the operation screen. For example, as shown in Fig. 30, the message of "aggregation mode is restricted" is displayed on the operation screen.

In Step S46, when the image memory 66 is enabled, the image memory 66 is selected. On the other hand, when the image memory 66 is disabled, the selection of the image memory 66 is prohibited, and the prohibition of the selection of the image memory 66 is displayed on the operation screen. In Step S49, when the I/O port 67 is enabled, the I/O port 67 is selected. On the other hand, when the I/O port 67 is disabled, the selection of the I/O port 67 is prohibited, and the prohibition of the selection of the I/O port 67 is displayed on the operation screen.

Fig. 31 schematically shows the image transfer path when there are restrictions on the reception image, the movement processing unit and aggregation processing unit in the edit unit 610, and the I/O port 67 corresponding to the transmission, which are displayed by the hatched lines. According to the fourth example, the same effect as the third example can be obtained. The use of the image input unit, image output unit, and edit mode is restricted in each user, so that the optimum processed image can be output in each user.

As can be seen from the above description, according to the invention, the processed images to which the required edit process is performed can be output from the digital multi function peripheral by the simple operation of the user. Accordingly, the invention can provide the image processing apparatus which can output the processed images to which the required edit process is performed by the simple operation and the computer which controls the image processing apparatus.

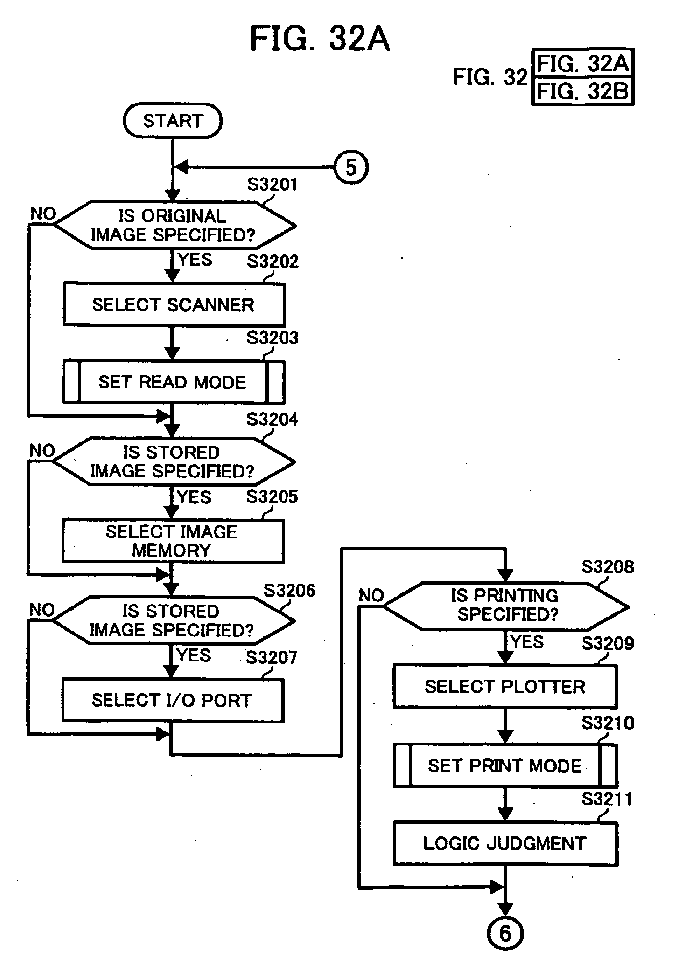

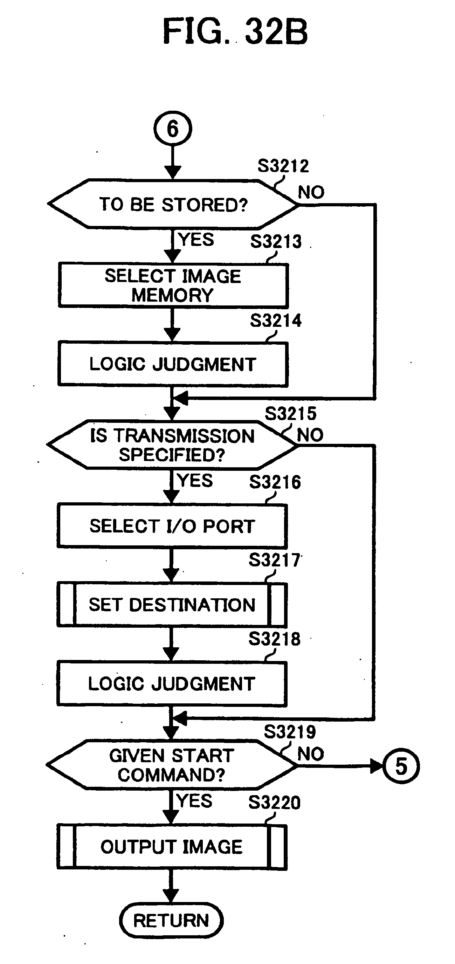

Then, a fifth example will be described. Fig. 32 is a flowchart of a fifth example of the control (image output control) according to the invention performed by the main controller 20 of the digital multi function peripheral 1. In the fifth example, an operation procedure of the operation screen of the liquid crystal touch panel 31 in the case where the processed images to which the required edit process is performed are output from the digital multi function peripheral 1 by the user operation will be described with reference to Figs. 9 to 15.

In the fifth example, Fig. 16 is referred to for the functional block diagram. Fig. 16 shows a configuration of the main part according to the invention along with an image transfer path when the control system of the digital multi function peripheral shown 1 is seen from the viewpoint of user. Fig. 17 is also referred to for the functional block diagram. Fig. 17 shows a configuration of a main part according to the invention when the control system of the digital multi function peripheral 1 is seen from the viewpoint of system. As shown in Figs. 16 and 17, the digital multi function peripheral 1 of the fifth example includes the input unit 600, the edit unit 610, and the output unit 620.

In the input unit 600, the scanner 50, the image memory 66, and the I/O port (network I/F) 67 can serve as the input functions of the original image, the stored image, and the reception image. In the edit unit 610, the image processing unit 40 and the scanner 50 can serve as the edit processing functions of these images (input images). In the output unit 620, the plotter 550, the image memory 66, and the I/O port 67 can serve as the output functions (functions as the image output unit) of the input images (including the image to which the edit process is performed). In the fifth example, the edit process (the process concerning the edit mode) performed by the edit unit 610 will be omitted.

As shown in Fig. 9, at predetermined timing such as power-on timing, the main controller 20 of the digital multi function peripheral 1 displays the operation screen (initial screen) including the input image specifying unit 310 and the output form specifying unit 320 on the liquid crystal touch panel 31 of the operation unit 30 of Fig. 3. Then, a processing routine shown in Fig. 32 is started when any one of function keys on the operation screen is pressed down, namely, when any one of the original image key 311, the stored image key 312, and the reception image key 313 of the input image specifying unit 310 and the print key 321, the store key 322, and the transmission key 323 of the output form specifying unit 320 is pressed down.

When the pressed-down function key is the original image key 311 on the input image specifying unit 310, it is determined in Step S3201 that the original image is specified as the input image, and the scanner 50 of Fig. 2 is selected in Step S3202. When the original image key 311 is pressed down, the monochrome display of the original image key 311 is reversed as shown in Fig. 10 (shown by the oblique lines). Before the user presses down the original image key 311, the user sets the original on the contact glass 6 or the original plate 2 of ADF 1B of Fig. 2.

Then, the read mode setting process is performed in Step S3203. For example, when the original image key 311 is pressed down again, the read mode setting unit 3111 including the single-sided key 3111a and the double-sided key 3111b is displayed on the operation screen as shown in Fig. 11. When either of the function keys is pressed down, the read mode corresponding to the pressed-down function key is set. That is, the single-sided read mode in which only the image in the single surface of the original is read is set when the single-sided key 3111a is pressed down, and the double-sided read mode in which the images in both the surfaces of the original are read is set when the double-sided key 3111b is pressed down. However, when the double-sided read mode is set, it is necessary to set the original on the original plate 2 of ADF 1B of Fig. 2.

When the pressed-down function key is the stored image key 312 on the input image specifying unit 310, it is determined in Step S3204 that the stored image is specified as the input image, and the image memory 66 of Fig. 6 is selected in Step S3205. When the pressed-down function key is the reception image key 313 on the input image specifying unit 310, it is determined in Step S3206 that the reception image is specified as the input image, and the I/O port 67 of Fig. 6 is selected in Step S3207.

When the pressed-down function key is the print key 321 on the output form specifying unit 320, it is determined in Step S3208 that the print output is specified as the output form, and the plotter 550 of Fig. 6 is selected in Step S3209. When the print key 321 is pressed down, the monochrome display of the print key 321 is reversed as shown in Fig. 12. Then, a print mode setting process is performed in Step S3210.

For example, when the print key 321 is pressed down again, the print mode setting unit 3211 including the single-sided key 3211a and the double-sided key 3211b is displayed on the operation screen as shown in Fig. 13. When either of the function keys is pressed down, the print mode corresponding to the pressed-down function key is set. That is, the single-sided print mode in which only the image is printed in the single surface of the transfer paper is set when the single-sided key 3211a is pressed down, and the double-sided print mode in which the images are printed in both the surfaces of the transfer paper is set when the double-sided key 3211b is pressed down.

When the print mode setting process is ended, the logic judgment process is performed in Step S3211. When the original image is specified as the input image, because the scanner 50 and the plotter 550 are selected, the image transfer path is determined such that the plotter 550 can perform the print output of the image read by the scanner 50. When the pressed-down function key is the store key 322 on the output form specifying unit 320, it is determined in Step S3212 that storing is specified as the output form, and the image memory 66 is selected in Step S3213. Then, the logic judgment process is performed in Step S3214 (the update is performed when the logic judgment process is already performed in Step S3211).

When the original image is specified as the input image, because the scanner 50 and the image memory 66 are selected, the image transfer path is determined such that the original image read by the scanner 50 can be input to the image memory 66. When the original image is specified as the input image and, at the same time, when the print output is also specified as the output form in addition to storing, because the scanner 50, the plotter 550, and the image memory 66 are selected, the image transfer path is determined such that the image read by the scanner 50 can be input to both the plotter 550 and the image memory 66.

When the pressed-down function key is the transmission key 323 on the output form specifying unit 320, it is determined in Step S3215 that the transmission is specified as the output form, and the I/O port 67 is selected in Step S3216. When the transmission key 323 is pressed down, the monochrome display of the transmission key 323 is reversed as shown in Fig. 14. Then, the destination setting process is performed in Step S3217.

For example, when the transmission key 323 is pressed down again, the destination specifying unit 3231 including the plural previously registered destinations (addresses) is displayed on the operation screen as shown in Fig. 15. When any one of the destinations is pressed down, the pressed-down destination is set. The new destination can also be input and set. In Fig. 15, the e-mail addresses are displayed as the plural destinations constituting the destination specifying unit 3231. However, other destinations such as the FAX number may be displayed, or various destinations such as the e-mail address and the Fax number may be displayed in a collective manner. Then, the logic judgment process is performed in Step S3218 (the update is performed when the logic judgment process is already performed in Steps S3211 or S3214).

When the original image is specified as the input image, because the scanner 50 and the I/O port 67 are selected, the image transfer path is determined such that the original image read by the scanner 50 can be input to the I/O port 67. When the stored image is specified as the input image, because the image memory 66 and the I/O port 67 are selected, the image transfer path is determined such that the image in the image memory 66 can be input to the I/O port 67.

When the original image is specified as the input image and, at the same time, when the print output is also specified as the output form in addition to the transmission, because the scanner 50, the plotter 550, and the I/O port 67 are selected, the image transfer path is determined such that the original image read by the scanner 50 can be input to both the plotter 550 and the I/O port 67. When the original image is specified as the input image and, at the same time, when storing is also specified as the output form in addition to the transmission, because the scanner 50, the image memory 66, and the I/O port 67 are selected, the image transfer path is determined such that the original image read by the scanner 50 can be input to both the image memory 66 and the I/O port 67.

Then, when the start key 33 of Fig. 3 is pressed down, the image output process is performed based on the logic judgment process. In the logic judgment process, when the image transfer path is determined such that the image (original image) read by the scanner 50 can be input to both the plotter 550 (print output) and the I/O port 67 (transmission) as shown in Fig. 16, as shown in Fig. 17, while the original image is read by the scanner 50, and the original image is temporarily stored in the image memory 66. Then, the original image is read and transferred to the plotter 550 to perform the print output, the original image is transmitted (delivered) from the I/O port 67 to the previously set destination through the network N, e.g., to the personal computer A or B through the e-mail.

When the image transfer path is determined such that the original image read by the scanner 50 can be input to both the image memory 66 and the plotter 550, the original image is read by the scanner 50, the original image is stored in the image memory 66, and the original image is read and transferred to the plotter 550 to perform the print output. When the image transfer path is determined such that the image in the image memory 66 can be input to both the plotter 550 and the I/O port 67, while the image in the image memory 66 is read and transferred to the plotter 550 to perform the print output, the image is transmitted to the previously set destination from the I/O port 67 through the network N.

When the image transfer path is determined such that the original image read by the scanner 50 can be input to the plotter 550, the original image is read by the scanner 50 and the original image is temporarily stored in the image memory 66. Then, the original image is read transferred to the plotter 550 to perform the print output. When the image transfer path is determined such that the original image read by the scanner 50 can be input to the image memory 66, the original image is read by the scanner 50, and the original image is stored in the image memory 66. When the image transfer path is determined such that the original image read by the scanner 50 can be input to the I/O port 67, the original image is read by the scanner 50 and the original image is temporarily stored in the image memory 66. Then, the image memory 66 is read and transmitted from the I/O port 67 to the previously set destination through the network N.

In Fig. 32, the process is simplified for convenience of explanation in the case where the pressed-down function key is the stored image key 312 on the input image specifying unit 310. However, for example, when the stored image key 312 is pressed down again, the image specifying unit including plural function keys (image specifying keys) corresponding to the images in the image memory 66 is displayed on the operation screen and, when any one of the function keys is pressed down, the process can be added such that the image corresponding to the function key is selected as the output image. The same holds true for the later-mentioned sixth and seventh examples.

According to the fifth example, the main controller of the digital multi function peripheral determines the image transfer path while selecting at least two image processing units used from the scanner, the image memory, the I/O port (network I/F), and the plotter, which are of the image processing unit, according to the combination of the input image and output form specified by the one-time key operation on the operation screen. Then, the required processed images are output using the selected image processing unit based on the determined image transfer path. Therefore, the operation is simplified when the required processed images are output from the digital multi function peripheral, and the operational efficiency is improved.

When the original image is stored in the image memory, the user specifies the stored image (image in the image memory) as the input image while specifying the print output as the output form, which allows the main controller of the digital multi function peripheral to determine the image transfer path to output the image in the image memory with the plotter while selecting the image memory and the plotter. Therefore, it is not necessary that the scanner read again the original image to which the print out is already performed once. That is, because the original image to which the print out is already performed once can be reused, the operational efficiency is improved. The main controller of the digital multi function peripheral reverses the monochrome display of the information indicating the specified input image and output form on the operation screen, so that the unintended output of the processed image can be avoided.

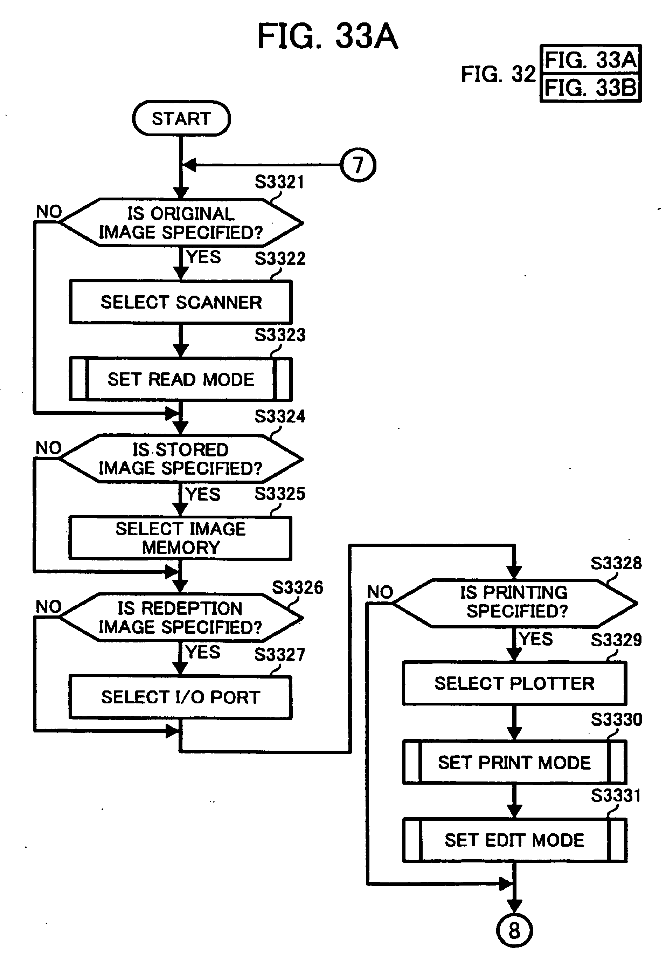

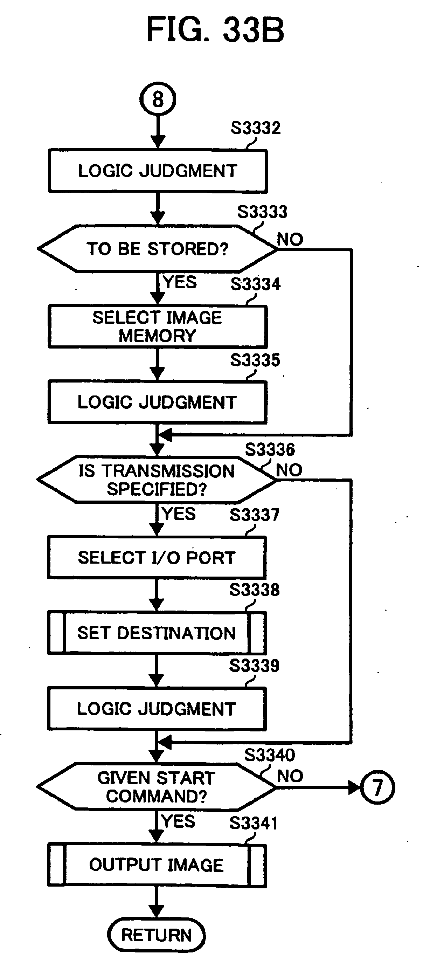

Then, a sixth example will be described. Fig. 33 is a flowchart of a sixth example of the control (image output control) according to the invention performed by the main controller 20 of the digital multi function peripheral 1. In the sixth example, Fig. 22 is referred to for the functional block diagram. Fig. 22 shows another configuration of the main part according to the invention along with an image transfer path when the control system of the digital multi function peripheral shown 1 is seen from the viewpoint of user. Fig. 23 is also referred to for the functional block diagram. Fig. 23 shows another configuration of the main part according to the invention when the control system of the digital multi function peripheral 1 is seen from the viewpoint of system.

In the sixth example, the operation screen displayed on the liquid crystal touch panel 31 is substantially similar to the first example. Therefore, the sixth example will be described with reference to Figs. 9 to 15. In the sixth example, the edit process (process concerning the edit mode) by the edit unit 610 is added to the fifth example which is described with reference to Figs.32 and the like. Therefore, the processes from Step S3328 of Fig. 33 including the edit process will be described. The edit process can be performed to the input image before the input image is temporarily stored or stored in the image memory 66 or after the input image is temporarily stored or stored in the image memory 66. In the sixth example, the edit process is performed after the input image is temporarily stored or stored in the image memory 66.

When the pressed-down function key is the print key 321 on the output form specifying unit 320, the main controller 20 of the digital multi function peripheral 1 determines that the print output is specified as the output form in Step S3328, and the main controller 20 selects the plotter 550 in Step S3329. Then, the main controller 20 performs the print mode setting process in Step S3330, and the main controller 20 performs an edit mode setting process in Step S3331. For example, when the print key 321 is pressed down again, an edit mode specifying unit (not shown) is displayed in addition to the print mode setting unit 3211 including the single-sided key 3211a and the double-sided key 3211b as shown in Fig. 13. When either of the function keys on the print mode setting unit 3211 is pressed down, the print mode corresponding to the pressed-down function key is set.

When any one of the function keys on the edit mode specifying unit is pressed down, the edit unit 610 is selected, and the edit mode corresponding to the pressed-down function key is set. For example, the variable magnification mode is set when the pressed-down function key is the variable magnification key, and the variable magnification ratio is set when the variable magnification ratio is specified by the predetermined key operation. The aggregation mode is set when the pressed-down function key is the aggregation key, and the number of sheets of the aggregation is set when the number of sheets of the aggregation is specified by the predetermined key operation. The movement mode is set when the pressed-down function key is the movement key, and movement source and movement destination are set when the movement source and the movement destination are specified by the predetermined key operation. The delete mode is set when the pressed-down function key is the delete key, and the delete position is set when the delete position is specified by the predetermined key operation. The setting contents (information) of the edit mode are displayed on the operation screen.

When the print mode setting process and the edit mode setting process are ended, the logic judgment process is performed in Step S3332. When the original image is specified as the input image and, at the same time, when the edit mode is set, because the scanner 50, the edit unit 610, and the plotter 550 are selected, the image transfer path is determined such that the edit unit 610 can perform the edit process to the original image read by the scanner 50 while the print output of the original image read by the scanner 50 can be performed by the plotter 550.

When the pressed-down function key is the store key 322 on the output form specifying unit 320, it is determined in Step S3333 that storing is specified as the output form, and the image memory 66 is selected in Step S3334. Then, in Step S3335, the logic judgment process is performed (the update is performed when the logic judgment process is already performed in Step S3332).

That is, when the original image is specified as the input image, because the scanner 50 and the image memory 66 are selected, the image transfer path is determined such that the original image read by the scanner 50 can be input to the image memory 66. When the original image is specified as the input image, when the print output is also specified as the output form in addition to storing, and when the edit mode is set at the same time, because the scanner 50, the edit unit 610, the plotter 550, and the image memory 66 are selected, the image transfer path is determined such that the original image read by the scanner 50 can be input to both the image memory 66 and the plotter 550 and, at the same time, such that the edit unit 610 can perform the edit process to the image input to the plotter 550.

When the pressed-down function key is the transmission key 323 on the output form specifying unit 320, it is determined in Step S3336 that the transmission is specified as the output form, and the I/O port 67 is selected in Step S3337. Then, the destination setting process is performed in Step S3338, and the logic judgment process is performed in Step S3339 (the update is performed when the logic judgment process is already performed in Step S3332 or S3335).

That is, when the original image is specified as the input image and, at the same time, when the edit mode is set, because the scanner 50, the edit unit 610, and the I/O port 67 are selected, the image transfer path is determined such that the edit unit 610 can perform the edit process to the original image read by the scanner 50 to input the original image to the I/O port 67. When the stored image is specified as the input image and, at the same time, when the edit mode is set, because the edit unit 610, the image memory 66, and the I/O port 67 are selected, the image transfer path is determined such that the edit unit 610 can perform the edit process to the image in the image memory 66 to input the image to the I/O port 67.

When the original image is specified as the input image, when the print output is also specified as the output form in addition to the transmission, and when the edit mode is set at the same time, because the scanner 50, the edit unit 610, the plotter 550, and the I/O port 67 are selected, the image transfer path is determined such that the edit unit 610 can perform the edit process to the original image read by the scanner 50 to input the original image to both the plotter 550 and the I/O port 67. When the original image is specified as the input image, when storing is also specified as the output form in addition to the transmission, and when the edit mode is set at the same time, because the scanner 50, the image memory 66, the edit unit 610, the plotter 550, and the I/O port 67 are selected, the image transfer path is determined such that the original image read by the scanner 50 can be input to both the image memory 66 and the I/O port 67 and, at the same time, such that the edit unit 610 can edit the image input to the I/O port 67.

Then, when the start key 33 is pressed down, the image output process is performed based on the logic judgment process. However, in this case, it is assumed that the edit mode is already set. In the logic judgment process shown in Fig. 22, when the image transfer path is determined such that the edit unit 610 can perform the edit process (for example, the variable magnification process) to the image (original image) read by the scanner 50 to input the image to the plotter 550 (print output), as shown in Fig. 23, the original image is read by the scanner 50 and the image is temporarily stored in the image memory 66. Then, the original image is read, the edit unit 610 performs the edit process to the original image, and the original image is transferred to the plotter 550 to perform the print output.

When the image transfer path is determined such that the edit unit 610 can perform the edit process to the image read by the scanner 50 to input the original image to the I/O port 67, the original image is read by the scanner 50 and the original image is temporarily stored in the image memory 66. Then, the original image is read, the edit unit 610 performs the edit process to the original image, and original image is transmitted from the I/O port 67 to the previously set destination through the network N. When the image transfer path is determined such that the edit unit 610 can perform the edit process to the image read by the scanner 50 to input the image to both the plotter 550 and the I/O port 67, the original image is read by the scanner 50 and the original image is temporarily stored in the image memory 66. Then, the original image is read, the edit unit 610 performs the edit process to the original image, and original image is transmitted from the I/O port 67 to the previously set destination through the network N while transferred to the plotter 550 to perform the print output.

When the image transfer path is determined such that the original image read by the scanner 50 can be input to both the image memory 66 and the plotter 550 and, at the same time, such that the edit unit 610 can edit the original image input to the plotter 550, the scanner 50 reads the original image to store the original image in the image memory 66. Then, the original image is read, the edit unit 610 performs the edit process to the original image, and the original image is transferred to the plotter 550 to perform the print output. When the image transfer path is determined such that the edit unit 610 can edit the image in the image memory 66 to input the image to both the plotter 550 and the I/O port 67, the image in the image memory 66 is read, the edit unit 610 performs the edit process to the image, and the image is transmitted from the I/O port 67 to the previously set destination through the network N while transferred to the plotter 550 to perform the print output.

At least two of the original image, the stored image, and the reception image are specified as the input image, e.g., the original image and the stored image are specified as the input image, the mode in which the input images of the original image and stored image are combined is specified as the edit mode, and the image transfer path is determined such that the image read by the scanner 50 in the logic judgment process and the image in the image memory 66 are combined by the edit unit 610 to input the combined image to both the plotter 550 and the I/O port 67. In this case, the original image is read by the scanner 50, the original image is temporarily stored in the image memory 66, the edit unit 610 combines the stored image memory 66 and another image stored in the image memory 66 in the same format in reading the stored image memory 66 and another image, the combined image can be transmitted to the previously set destination from the I/O port 67 through the network N while transferred to the plotter 550 to perform the print output.

According to the sixth example, the main controller of the digital multi function peripheral determines the image transfer path while selecting at least three image processing units (including the edit unit) used from the scanner, the edit unit, the image memory, the I/O port, and the plotter, which are of the image processing unit, according to the combination of the input image and output form and the edit mode specified by the one-time key operation on the operation screen. Then, the required processed images are output using the selected image processing unit based on the determined image transfer path. Therefore, the operation is simplified when the required processed images are output from the digital multi function peripheral, and the operational efficiency is improved.

When the original image is stored in the image memory, the user specifies the stored image as the input image while specifying the print output as the output form, which allows the main controller of the digital multi function peripheral to determine the image transfer path to output the image in the image memory with the plotter while selecting the image memory and the plotter. Therefore, it is not necessary that the scanner read again the original image to which the print out is already performed once. That is, because the original image to which the print out is already performed once can be reused, the operational efficiency is improved. The main controller of the digital multi function peripheral displays the setting contents of the specified edit mode on the operation screen while reversing the monochrome display of the information indicating the specified input image and output form on the operation screen, so that the unintended output of the processed image can securely be avoided.

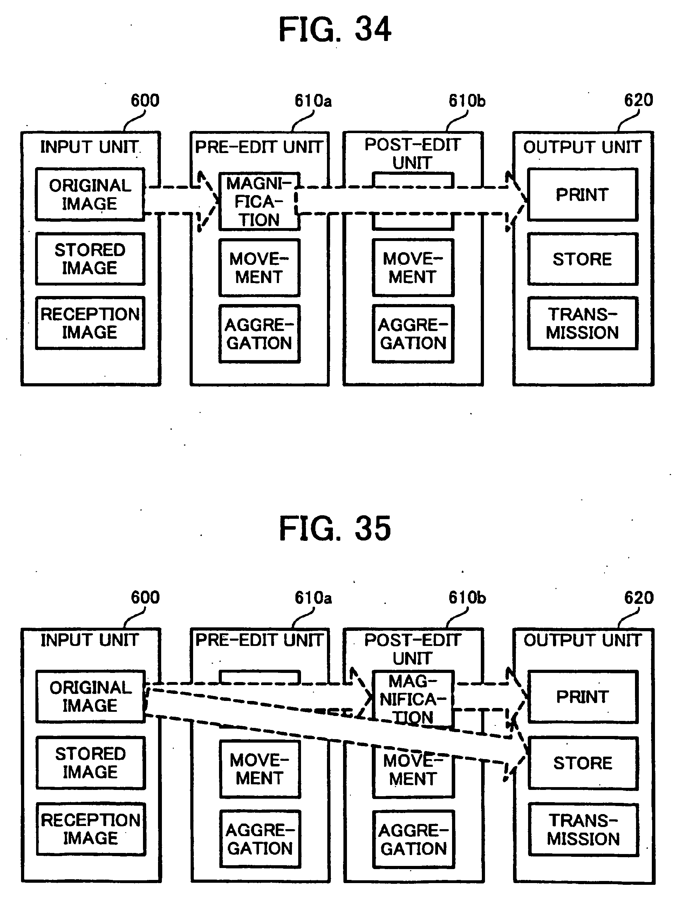

Then, a seventh example will be described. Fig. 34 is a functional block diagram showing still another configuration of the main part according to the invention along with an image transfer path when the control system of the digital multi function peripheral 1 is seen from the viewpoint of user. In Fig. 34, the same component as that of Fig. 22 is designated by the same numeral. Fig. 35 is a functional block diagram showing still another configuration of the main part according to the invention along with another image transfer path when the control system of the digital multi function peripheral 1 is seen from the viewpoint of system. In Fig. 35, the same component as that of Fig. 22 is designated by the same numeral.

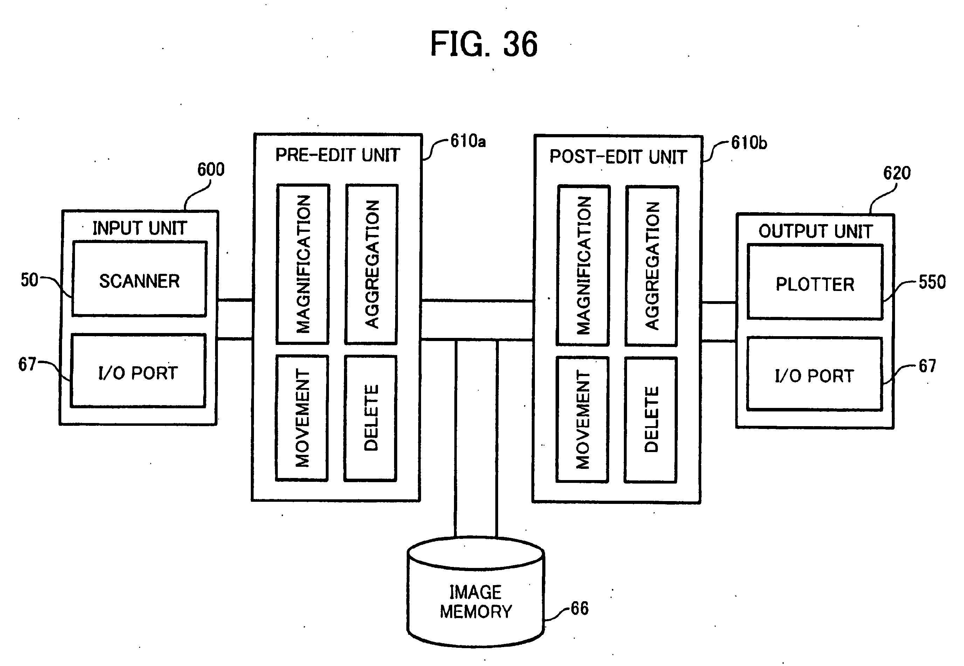

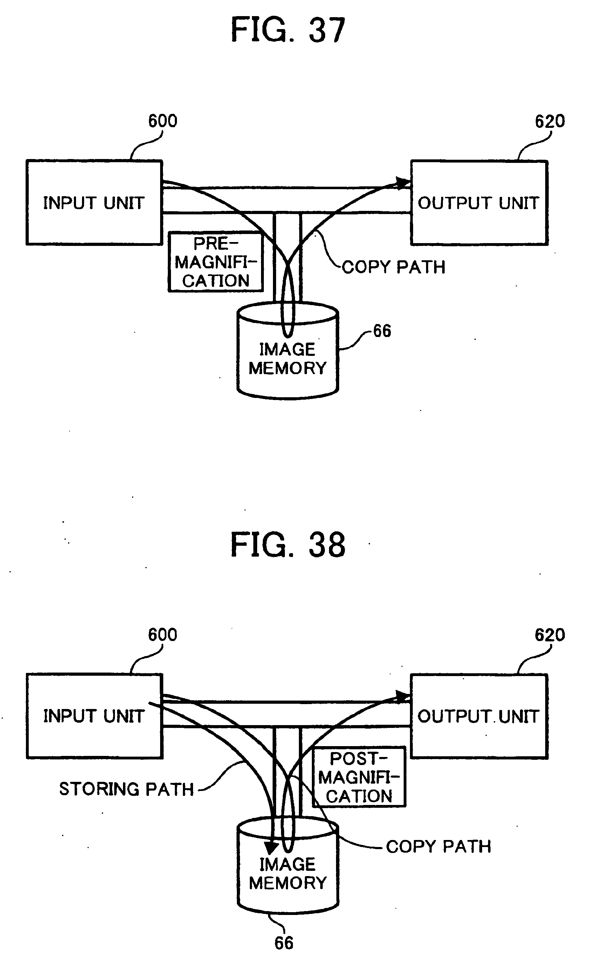

Fig. 36 is a functional block diagram showing still another configuration of the main part according to the invention when the control system of the digital multi function peripheral 1 is seen from the viewpoint of system. In Fig. 36, the same component as that of Fig. 23 is designated by the same numeral. Fig. 37 is an explanatory view for explaining an image output process including a pre-variable magnification process, which is performed by the control system of the digital multi function peripheral 1. Fig. 38 is an explanatory view for explaining an image output process including a post-variable magnification process, which is performed by the control system of the digital multi function peripheral 1.

The seventh example differs from the sixth example only in the edit process, so that the seventh example will be described with reference to Fig. 33. In the seventh example, the operation screen displayed on the liquid crystal touch panel 31 is substantially similar to the fifth example. Therefore, the seventh example will be described with reference to Figs. 9 to 15. As shown in Figs. 34 to 36, the digital multi function peripheral 1 includes the input unit 600, a pre-edit unit 610a, a post-edit unit 610b, and the output unit 620.

In the input unit 600, the scanner 50, the image memory 66, and the I/O port 67 can serve as the input functions of the input images (the original image, the stored image, and the reception image). In the pre-edit unit 610a, the image processing unit 40 and the scanner 50 can serve as the edit processing functions (for example, the variable magnification process, the movement process, and the aggregation process) of the input images. In the post-edit unit 610b, the image processing unit 40 can serve as the edit processing functions of the impute images. In the output unit 620, the plotter 550, the image memory 66, and the I/O port 67 can serve as output functions (functions as the image output unit) of the input images (including the image to which the edit process is performed) .

When the any one of the function keys on the edit mode specifying unit is pressed down in the edit mode setting process of Step S3331, the main controller 20 of the digital multi function peripheral 1 of the seventh embodiment sets the edit mode corresponding to the pressed-down function key. The edit mode setting process of Step S3331 is similar to the second example. When the specified input image is not the original image, the main controller 20 selects the post-edit unit 610b. When the specified input image is only the original image, the pre-edit unit 610a or the post-edit unit 610b is selected by the user's key operation on the operation screen. However, when the set edit mode is only the mode concerning the image variable magnification (variable magnification mode or aggregation mode), the pre-edit unit 610a or the post-edit unit 610b can also automatically be selected. For example, the pre-edit unit 610a can automatically be selected when the specified output form is only the print output, and the post-edit unit 610b can automatically be selected when the specified output form is only storing of the image.

When the print mode setting process and the edit mode setting process are ended, the logic judgment process is performed in Step S3332. When the original image is specified as the input image and, at the same time, when the edit mode is set, the scanner 50 and the plotter 550 are selected. At this point, when the pre-edit unit 610a is further selected, the image transfer path is determined such that the pre-edit unit 610a can perform the edit process to the image read by the scanner 50 to perform the print output with the plotter 550 (when the mode concerning the image variable magnification such as the variable magnification mode or aggregation mode, the scanner 50 can perform the variable magnification if needed in reading the original image with the scanner 50). When the post-edit unit 610b is selected, the image transfer path is determined such that the post-edit unit 610b can perform the edit process to the image read by the scanner 50 to perform the print output with the plotter 550.

When the pressed-down function key is the store key 322 on the output form specifying unit 320, it is determined in Step S3333 that storing is specified as the output form, and the image memory 66 is selected in Step S3334. Then, in Step S3335, the logic judgment process is performed (the update is performed when the logic judgment process is already performed in Step S3332).

That is, when the original image is specified as the input image, because the scanner 50 and the image memory 66 are selected, the image transfer path is determined such that the original image read by the scanner 50 can be input to the image memory 66. When the original image is specified as the input image, when the print output is also specified as the output form in addition to storing, and when the edit mode is set at the same time, the scanner 50, the plotter 550, and the image memory 66 are selected. At this point, when the post-edit unit 610b is further selected, the image transfer path is determined such that the image read by the scanner 50 can be input to both the image memory 66 and the plotter 550 and, at the same time, such that the post-edit unit 610b can edit the image input to the plotter 550.

When the pressed-down function key is the transmission key 323 on the output form specifying unit 320, it is determined in Step S3336 that the transmission is specified as the output form, and the I/O port 67 is selected in Step S3337. Then, the destination setting process is performed in Step S3338, and the logic judgment process is performed in Step S3339 (the update is performed when the logic judgment process is already performed in Step S3332 or S3335) :

That is, when the original image is specified as the input image and, at the same time, when the edit mode is set, the scanner 50 and the I/O port 67 are selected. At this point, when the pre-edit unit 610a or the post-edit unit 610b is further selected, the image transfer path is determined such that the pre-edit unit 610a or the post-edit unit 610b can perform the edit process to the image read by the scanner 50 to input the image to the I/O port 67. When the stored image is specified as the input image and, at the same time, when the edit mode is set, the image memory 66 and the I/O port 67 are selected. At this point, when the post-edit unit 610b is further selected, the image transfer path is determined such that the processing unit corresponding to the post-edit unit 610b can perform the edit process to the image in the image memory 66 to input the image to the I/O port 67.

When the original image is specified as the input image, when the print output is also specified as the output form in addition to the transmission, and when the edit mode is set at the same time, the scanner 50, the plotter 550, and the I/O port 67 are selected. At this point, when the pre-edit unit 610a or the post-edit unit 610b is further selected, the image transfer path is determined such that the pre-edit unit 610a or the post-edit unit 610b can perform the edit process to the image read by the scanner 50 to input the image to both the plotter 550 and the I/O port 67. When the original image is specified as the input image, when storing is also specified as the output form in addition to the transmission, and when the edit mode is set at the same time, the scanner 50, the image memory 66, and the I/O port 67 are selected. At this point, when the post-edit unit 610b is further selected, the image transfer path is determined such that the original image read by the scanner 50 can be input to both the image memory 66 and the I/O port 67 and, at the same time, such that the post-edit unit 610b can edit the image input to the I/O port 67.

Then, when the start key 33 is pressed down, the image output process is performed based on the logic judgment process. However, in this case, it is assumed that the edit mode is already set. In the logic judgment process, as shown in Fig. 34, when the image transfer path is determined such that the pre-edit unit 610a can perform the edit process (for example, the variable magnification process) to the image (original image) read by the scanner 50 to input the image to the plotter 550 (print output), as shown in Figs. 36 and 37, the original image is read by the scanner 50, the pre-edit unit 610a performs the edit process (for example, pre-variable magnification process) to the original image, and the original image is temporarily stored in the image memory 66. Then, the original image is read and transferred to the plotter 550 to perform the print output. In the case where the pre-edit unit 610a performs the variable magnification process, particularly in the case where the pre-edit unit 610a performs the contraction variable magnification process, in consideration of throughput of the copy, it is desirable that the variable magnification process be performed in an optical manner by the scanner 50.

When the image transfer path is determined such that the pre-edit unit 610a can perform the edit process to the image read by the scanner 50 to input the image to the I/O, port 67, the scanner 50 reads the original image, the pre-edit unit 610a performs the edit process to the original image, and the original image is temporarily stored in the image memory 66. Then, the original image is read and transmitted from the I/O port 67 to the previously set destination through the network N. When the image transfer path is determined such that the pre-edit unit 610a can perform the edit process to the image read by the scanner 50 to input the image to both the plotter 550 and the I/O port 67, the scanner 50 reads the original image, the pre-edit unit 610a performs the edit process to the original image, and the original image is temporarily stored in the image memory 66. Then, the original image is read and transmitted from the I/O port 67 to the previously set destination through the network N while transferred to the plotter 550 to perform the print output.

As shown in Fig. 35, when the image transfer path is determined such that the image (original image) read by the scanner 50 can be input to both the plotter 550 (print output) and the image memory 66 and, at the same time, such that the post-edit unit 610b can perform the edit process (for example, the variable magnification process) to the image input to the plotter 550, as shown in Figs. 36 and 38, the scanner 50 reads the original image, the original image is stored in the image memory 66, the original image is read from the image memory 66, and the post-edit unit 610b performs the edit process (for example, the post-variable magnification process). Then, the original image is transferred to the plotter 550 to perform the print output. When the original image is stored in the image memory 66, in consideration of the reuse of the original image for the jobs such as the variable magnification process, it is desirable that the variable magnification process be electrically performed by the post-edit unit 610b.

When the image transfer path is determined such that the post-edit unit 610b can edit the image in the image memory 66 to input the image to both the plotter 550 and the I/O port 67, the image in the image memory 66 is read and the post-edit unit 610b performs the edit process to the image. Then, the image is transmitted to the previously set destination from the I/O port 67 through the network N while transferred to the plotter 550 to perform the print output.

At least two of the original image, the stored image, and the reception image are specified as the input image, e.g., the original image and the stored image are specified as the input image, the mode in which the input images of the original image and stored image are combined is specified as the edit mode, and the image transfer path is determined such that the image read by the scanner 50 in the logic judgment process and the image in the image memory 66 are combined by the post-edit unit 610b to input the combined image to both the plotter 550 and the I/O port 67. In this case, the original image is read by the scanner 50, the original image is temporarily stored in the image memory 66, the post-edit unit 610b combines the stored image memory 66 and another image stored in the image memory 66 in the same format in reading the stored image memory 66 and another image, the combined image can be transmitted to the previously set destination from the I/O port 67 through the network N while transferred to the plotter 550 to perform the print output.

According to the seventh example, the main controller of the digital multi function peripheral determines the image transfer path while selecting at least three image processing units (including the pre-edit unit or the post-edit unit) used from the scanner, the pre-edit unit, the post-edit unit, the image memory, the I/O port, and the plotter, which are of the image processing unit, according to the combination of the input image and output and the edit mode form specified by the one-time key operation on the operation screen. Then, the required processed images are output using the selected image processing unit based on the determined image transfer path. Therefore, the operation is simplified when the required processed images are output from the digital multi function peripheral, and the operational efficiency is improved:

When the original image is stored in the image memory, the user specifies the stored image as the input image while specifying the print output as the output form, which allows the main controller of the digital multi function peripheral to determine the image transfer path to output the image in the image memory with the plotter while selecting the image memory and the plotter. Therefore, it is not necessary that the scanner read again the original image to which the print out is already performed once. That is, because the original image to which the print out is already performed once can be reused, the operational efficiency is improved. The main controller of the digital multi function peripheral displays the setting contents of the specified edit mode on the operation screen while reversing the monochrome display of the information indicating the specified input image and output form, so that the unintended output of the processed image can securely be avoided.

Additionally, the required image can efficiently be output by automatically selecting the edit process performed by the pre-edit unit and the edit process performed by the post-edit unit according to the combination of the specified input image, output form, and edit mode. For example, the original image is specified as the input image, the mode concerning the image variable magnification is specified, and only the print output is specified as the output form. In this case, when the pre-edit unit is selected, as shown in Fig. 37, before the original image (image of simple copy) to which only the print output is performed is input to the image memory, the variable magnification process is performed to the original image. Therefore, when the variable magnification is the contraction variable magnification, the image transfer time from the image memory to the plotter is shortened to decrease the copy time. For example, the original image is specified as the input image, the mode concerning the image variable magnification is specified, and storing is specified as the output form. In this case, when the post-edit unit is selected, as shown in Fig. 38, the variable magnification process is performed to the original image to which storing and the print output are performed in reading the original image from the image memory. Therefore, the original image stored in the image memory becomes 1:1 magnification, and the original image is easily reused in other jobs.

Then, an eighth example will be described. In the eighth example, Fig. 29 is referred to for the flowchart. Fig. 29 shows an example of the control according to the invention performed by the main controller 20 of the digital multi function peripheral 1. In the eighth example, Fig. 30 is referred to for the operation screen including the message of setting NG (the aggregation mode cannot be used). Fig. 39 is a functional block diagram showing still another configuration of the main part according to the invention along with still another image transfer path when the control system of the digital multi function peripheral 1 is seen from the viewpoint of user. In Fig. 39, the same component as that of Fig. 22 is designated by the same numeral.

In the eighth example, the new processes such as the user authentication process are added to the sixth example. Therefore, the eighth example will be described with reference to Fig. 33. In the main controller 20 of the digital multi function peripheral 1, the user ID (user identification information) for individually identifying plural users who can use the digital multi function peripheral 1 and the restriction information for indicating enabled/disabled in each image input unit, each image output unit, and each edit mode can be input by the key operation of the operation unit 30 shown in Fig. 3, and each user ID can be stored in the NV-RAM 74 of Fig. 6 in association with the restriction information for indicating enabled/disabled in each image input unit, each image output unit, and each edit mode.

The main controller 20 of the digital multi function peripheral 1 performs the user authentication process in Step S71 at predetermined timing such as power-on timing. That is, the operation screen (user ID input screen) for inputting the user ID is displayed on the liquid crystal touch panel 31 of the operation unit 30. Only when the user ID corresponds to any one of the previously registered user IDs (stored in the NV-RAM 74 of Fig. 6) after the user ID is input by the key operation of the operation unit 30, the use of the digital multi function peripheral 1 is permitted, and the flow goes to Step S72.

The logic restriction judgment process is performed in Step S72. That is, the main controller 20 determines whether each image input unit, each image output unit, and each edit mode are enabled or disabled by comparing the previously input user ID and the restriction information in the NV-RAM 74. Then, the image output control (see Fig. 33) is performed in Step S73. However, in Step S3322 of Fig. 33, when the scanner 50 is enabled, the scanner 50 is selected. On the other hand, when the scanner 50 is disabled, the selection of the scanner 50 is prohibited, and the prohibition of the selection of the scanner 50 is displayed on the operation screen.

In Step S3325, when the image memory 66 is enabled, the image memory 66 is selected. On the other hand, when the image memory 66 is disabled, the selection of the image memory 66 is prohibited, and the prohibition of the selection of the image memory 66 is displayed on the operation screen. In Step S3327, when the I/O port 67 is enabled, the I/O port 67 is selected. On the other hand, when the I/O port 67 is disabled, the selection of the I/O port 67 is prohibited, and the prohibition of the selection of the I/O port 67 is displayed on the operation screen. In Step S3329, when the plotter 550 is enabled, the plotter 550 is selected. On the other hand, when the plotter 550 is disabled, the selection of the plotter 550 is prohibited, and the prohibition of the selection of the plotter 550 is displayed on the operation screen.

In Step S3331, when the variable magnification mode is specified during the variable magnification mode (variable magnification processing function of the pre-edit unit 610a or the post-edit unit 610b) is enabled, the pre-edit unit 610a or the post-edit unit 610b is selected. On the other hand, when the variable magnification mode is specified during the variable magnification mode is disabled, the selection of the variable magnification processing function of the pre-edit unit 610a or the post-edit unit 610b is prohibited, and the message that the use of the variable magnification mode is prohibited is displayed on the operation screen. When the movement mode is specified during the movement mode (movement processing function of the pre-edit unit 610a or the post-edit unit 610b) is enabled, the pre-edit unit 610a or the post-edit unit 610b is selected. On the other hand, when the movement mode is specified during the movement mode is disabled, the selection of the movement processing function of the pre-edit unit 610a or the post-edit unit 610b is prohibited, and the message that the use of the movement mode is prohibited is displayed on the operation screen.

When the aggregation mode is specified during the aggregation mode (aggregation processing function of the pre-edit unit 610a or the post-edit unit 610b) is enabled, the pre-edit unit 610a or the post-edit unit 610b is selected. On the other hand, when the aggregation mode is specified during the aggregation mode is disabled, the selection of the aggregation processing function of the pre-edit unit 610a or the post-edit unit 610b is prohibited, and the message that the use of the aggregation mode is prohibited is displayed on the operation screen. For example, as shown in Fig. 30, the message of "aggregation mode is restricted" is displayed on the operation screen.

In Step S3334, when the image memory 66 is enabled, the image memory 66 is selected. On the other hand, when the image memory 66 is disabled, the selection of the image memory 66 is prohibited, and the prohibition of the selection of the image memory 66 is displayed on the operation screen. In Step S3338, when the I/O port 67 is enabled, the I/O port 67 is selected. On the other hand, when the I/O port 67 is disabled, the selection of the I/O port 67 is prohibited, and the prohibition of the selection of the I/O port 67 is displayed on the operation screen.

Fig. 39 schematically shows the image transfer path when there are restrictions on the reception image, the movement processing functions and aggregation processing functions of the pre-edit unit 610a and the post-edit unit 610b, and the I/O port 67 corresponding to the transmission, which are displayed by the hatched lines. According to the eighth example, the same effect as the seventh example can be obtained. The use of the image processing units (functions) is restricted in each user, so that the optimum processed image can be output in each user.

Thus, the embodiment in which the invention is applied to the digital multi function peripheral is described. However, the invention is not limited to the embodiment, but the invention can be applied to other pieces of image processing apparatus such as a digital copying machine and a facsimile machine. The program according to the invention is a program which causes the computer (CPU), which controls the image processing apparatus, to realize the various functions according to the invention, namely, the functions of the input image specifying unit, the output form specifying unit, the selection determination unit, the control unit (the edit unit, the pre-edit control unit, the post-edit control unit, the edit control selection unit), the information display unit, the edit mode specifying unit, the enable/disable determination unit, usage prohibition unit, the annunciation unit, and the user identification information input unit. The above effects can be obtained by causing the computer to execute the program.

The program can be stored in the storage unit such as the ROM and HDD from the first, and the program can also be provided while recorded in a non-volatile recording medium (memory) such as CD-ROM, a flexible disk, a SRAM, an EEPROM, and a memory card. The above procedures can be performed by causing the computer to execute the program recorded in the memory or by causing the computer to read the program from the memory to execute the program. The program can be executed by downloading the program from the network-connected external device having the recording medium in which the program is recorded or from the external device in which the program is stored in the storage unit.

As is clear from the above descriptions, according to the invention, the user performs the simple operation once, which allows the required processed images to be output from the image processing apparatus. Accordingly, the invention can provide the image processing apparatus which can output the required processed images by the one-time simple operation, and the computer which controls the image processing apparatus. Those skilled in the art could easily derive further effects and modifications. Therefore, the wider mode of the invention shall not be limited to the above described particular details and the representative embodiment. Accordingly, various changes could be made

The invention is defined by the following claims.

## Claims

1. An image processing apparatus (1) comprising:
a plurality of image processing units (50, 67, 66, 550);
an operation screen in including an output-form specifying unit,
said output-form specifying unit (320) configured to allow at least two output forms of an input image to be specified before a start key is pressed down to process the input image based on the at least two specified output forms, wherein
said at least two output froms are specified from among output of an image by a print output unit (550), by storing of an image in an image storing unit (66) and by transmission of an image by a transmitting unit (67); and
a control unit (20) configured to select at least two of the image processing units (50, 67, 66, 550) for processing the input image based on the at least two specified output forms, and cause each of the at least two selected image processing units (50, 67, 66, 550) to process the input image based on the respectively corresponding output form of the at least two specified output forms.

2. The image processing apparatus (1) according to claim 1, wherein the image processing apparatus (1) includes:
an image input unit (600) that includes:
an original read unit (50) configured to read an original image;
an image reception unit (67) configured to receive an image from an external device; and
the image storing unit (66) configured to store an image;
an image output unit (620) that includes:
the print output unit (550) configured to print an image on a recording medium; and
the transmitting unit (67) configured to transmit an image to the external device; and
the image processing apparatus (1) further comprising an input-image specifying unit (310) configured to specify the input image, wherein
the input-image specifying unit (310) is configured to specify an original image as the input image, the output-form specifying unit (320) is configured to specify storing as an output form of the input image, so that the control unit (20) selects the original read unit (50) to read an original image and input the original image as the input image, and selects the image storing unit (66) to store the input image.

3. The image processing apparatus (1) according to claim 2, wherein the control unit (20) further includes:
a preview image creating unit (31) configured to create a preview image based on the input image before the input image is stored in the image storing unit (66);
a preview image display unit (31) configured to display the preview image; and
an output deciding unit configured to decide whether the input image corresponding to the preview image is to be output to the image storing unit (66).

4. The image processing apparatus (1) according to claim 3, wherein the preview image creating unit (31) is configured to create the preview image by thinning out the input image.

5. The image processing apparatus (1) according to claim 3, further comprising a preview-image storage unit configured to store therein the preview image,
wherein the preview image creating unit (31) is configured to create the preview image in parallel with the image storing unit (66) storing the input image, and the preview image creating unit (31) is configured to store the preview image in the preview-image storage unit.

6. The image processing apparatus (1) according to claim 3, wherein the preview image creating unit (31) is configured to create the preview image after the image storing unit (66) stores therein the input image.

7. The image processing apparatus (1) according to claim 3, further comprising:
an editing-contents setting unit configured to set editing contents indicative of how the input image is to be edited; and
a plurality of editing units configured to edit the input image based on specified editing contents, wherein
the control unit (20) is configured to select at least one of the editing units for editing the input image based on the specified output form, and
the preview image creating unit (31) is configured to correct the preview image based on selection made by the control unit (20).

8. The image processing apparatus (1) according to claim 1, further comprising an information display unit configured to display the input image and the specified output form.

9. The image processing apparatus (1) according to claim 1, wherein the image processing apparatus (1) includes:
an image input unit (600) that includes:
an original read unit (50) configured to read an original image;
an image reception unit (67) configured to receive an image from an external device; and
the image storing unit (66) configured to store an image;
an image output unit (620) that includes:
the print output unit (550) configured to print an image on a recording medium; and
a transmitting unit (67) configured to transmit an image to the external device; and
the image processing apparatus (1) further comprising an input-image specifying unit (310) configured to specify the input image.

10. The image processing apparatus (1) according to claim 9, further comprising:
an edit mode specifying unit configured to specify an edit mode; and
an edit unit configured to edit the input image, wherein
the edit unit is configured to edit the input image based on the edit mode, and
the control unit (20) is configured to select at least three of the image processing units (50, 67, 66, 550) based on the edit mode in addition to the input image and the specified output forms.

11. The image processing apparatus (1) according to claim 10, wherein the input images are provided in plurality and the edit mode includes combining the input images in same format.

12. The image processing apparatus (1) according to claim 10, wherein the control unit (20) further includes: -
a pre-edit control unit configured to cause the edit unit to edit the specified input image, when the input image is stored in the image storing unit (66);
a post-edit control unit configured to cause the edit unit to edit the image in the image storing unit (66), when the image is output in the output form specified by the output-form specifying unit (320) ; and
an edit control selection unit configured to select the pre-edit control unit or the post-edit control unit according to combination of the specified input image, the output forms specified by the output-form specifying unit (320), and the edit mode specified by the edit mode specifying unit.

13. The image processing apparatus (1) according to claim 12, wherein the original read unit (50) is a unit which optically reads an original image,
the edit unit includes an optical variable magnification unit configured to perform variable magnification of the image when the original image is read by the original read unit (50) and an electrical variable magnification unit configured to perform the variable magnification of the image when the image in the image storing unit (66) is output, and
the edit control selection unit is configured to select the pre-edit control unit, when the original image read by the original read unit (50) is specified by the input-image specifying unit (310), when a mode concerning the image variable magnification is specified by the edit mode specifying unit, and when only output by the print output unit (550) is specified by the output-form specifying unit (320).

14. The image processing apparatus (1) according to claim 13, wherein the edit control selection unit is configured to select the post-edit control unit, when the original image read by the original read unit (50) is specified by the input-image specifying unit (310), when the mode concerning the image variable magnification is specified by the edit mode specifying unit, and when storing in the image storing unit (66) is specified by the output-form specifying unit (320).

15. The image processing apparatus (1) according to claim 1, further comprising:
a user identification information input unit configured to input user identification information, which is unique to a user, for a plurality of users; and
a restriction information storage unit in which the plurality of pieces of user identification information are stored in association with restriction information for indicating enable and disable in each image processing unit, wherein the control unit (20) further includes
an enable and disable determination unit configured to determine whether each image processing unit (50, 67, 66, 550) is enabled or disabled by referring to the restriction information corresponding to the user identification information in the restriction information storage unit when the identification information input unit inputs the user identification information;
a usage prohibition unit configured to prohibit use of the image processing unit in which the enable and disable determination unit determined that the image processing unit is disabled; and
an annunciation unit configured to inform a user of prohibition of the use of the image processing unit (50, 67, 66, 550).

16. The image processing apparatus (1) according to claim 1, further comprising:
a user identification information input unit configured to input user identification information, which is unique for a user, for a plurality of users; and
a restriction information storage unit in which the plurality of pieces of user identification information are stored in association with restriction information for indicating enable and disable in each edit mode, wherein the control unit (20) further includes
an enable and disable determination unit configured to determine whether each edit , mode is enabled or disabled by referring to the restriction information corresponding to the user identification information in the restriction information storage unit when the identification information input unit inputs the user identification information;
a usage prohibition unit configured to prohibit use of the edit mode in which the enable and disable determination unit determined that the edit mode is disabled; and
an annunciation unit configured to inform a user of prohibition of the use of the edit mode.

17. The image processing apparatus (1) according to any one of claims 1 to 16, wherein
the second output form of the at least two output forms is specified in addition to the first output form of the at least two output forms on a single operation screen.

18. An image output method comprising:
allowing specifying at least two output forms of an input image before a start key is pressed down to process the input image based on the at least two specified output forms;
selecting at least two image processing units (50, 67, 66, 550) from among a plurality of image processing units (50, 67, 66, 550) for processing the input image based on the at least two specified output forms, wherein the at least two output forms are specified from among output of an image by a print output unit (550), by storing of an image in an image storing unit (66), and by transmission of an image by a transmitting unit (67); and
causing each of the at least two selected image processing units (50, 67, 66, 550) to process the input image based on the respectively corresponding output from the at least two specified output forms.

19. The image output method according to claim 18, wherein
the second output form of the at least two output forms is specified in addition to the first output form of the at least two output forms on a single operation screen.

20. A computer program product that stores therein a computer program which when executed causes a computer to execute all the steps of the method according to claim 18 or 19.

## Patentansprüche

1. Bildverarbeitungsvorrichtung (1), die umfasst:
mehrere Bildverarbeitungseinheiten (50, 67, 66, 550);
einen Arbeitsbildschirm, der eine Ausgabeform-Spezifizierungseinheit enthält, wobei die Ausgabeform-Spezifizierungseinheit (320) konfiguriert ist, um die Spezifizierung wenigstens zweier Ausgabeformen eines Eingangsbildes zuzulassen, bevor eine Starttaste gedrückt wird, um das Eingangsbild anhand der wenigstens zwei spezifizierten Ausgabeformen zu verarbeiten, wobei
die wenigstens zwei Ausgabeformen aus der Ausgabe eines Bildes durch eine Druckausgabeeinheit (550), aus dem Speichern eines Bildes in einer Bildspeichereinheit (66) und aus dem Senden eines Bildes durch eine Sendeeinheit (67) spezifiziert werden; und
eine Steuereinheit (20), die konfiguriert ist, um wenigstens zwei der Bildverarbeitungseinheiten (50, 67, 66, 550) auszuwählen, um ein Eingangsbild anhand der wenigstens zwei spezifizierten Ausgabeformen zu verarbeiten und um jede der wenigstens zwei ausgewählten Bildverarbeitungseinheiten (50, 67, 66, 550) dazu zu veranlassen, das Eingangsbild anhand der jeweils entsprechenden Ausgabeform der wenigstens zwei spezifizierten Ausgabeformen zu verarbeiten.

2. Bildverarbeitungsvorrichtung (1) nach Anspruch 1, wobei die Bildverarbeitungsvorrichtung (1) umfasst:
eine Bildeingabeeinheit (600), die enthält:
eine Original-Leseeinheit, die konfiguriert ist, um ein Originalbild zu lesen;
eine Bildempfangseinheit (67), die konfiguriert ist, um ein Bild von einer externen Vorrichtung zu empfangen; und
die Bildspeichereinheit (66), die konfiguriert ist, um ein Bild zu speichern;
eine Bildausgabeeinheit (620), die enthält:
die Druckausgabeeinheit (550), die konfiguriert ist, um ein Bild auf ein Aufzeichnungsmedium zu drucken; und
die Sendeeinheit (67), die konfiguriert ist, um ein Bild zu der externen Vorrichtung zu senden; und
wobei die Bildverarbeitungsvorrichtung (1) ferner eine Eingangsbild-Spezifizierungseinheit (310) umfasst, die konfiguriert ist, um das Eingangsbild zu spezifizieren, wobei
die Eingangsbild-Spezifizierungseinheit (310) konfiguriert ist, um ein Originalbild als das Eingangsbild zu spezifizieren, und die Ausgabeform-Spezifizierungseinheit (320) konfiguriert ist, um das Speichern als eine Ausgabeform des Eingangsbildes zu spezifizieren, so dass die Steuereinheit (20) die Original-Leseeinheit (50) auswählt, um ein Originalbild zu lesen und um das Originalbild als das Eingangsbild einzugeben, und die Bildspeichereinheit (66) auswählt, um das Eingangsbild zu speichern.

3. Bildverarbeitungsvorrichtung (1) nach Anspruch 2, wobei die Steuereinheit (20) ferner umfasst:
eine Vorschaubild-Erzeugungseinheit (31), die konfiguriert ist, um anhand des Eingangsbildes ein Vorschaubild zu erzeugen, bevor das Eingangsbild in der Bildspeichereinheit (66) gespeichert wird;
eine Vorschaubild-Anzeigeeinheit (31), die konfiguriert ist, um das Vorschaubild anzuzeigen; und
eine Ausgangsentscheidungseinheit, die konfiguriert ist, um zu entscheiden, ob das dem Vorschaubild entsprechende Eingangsbild zu der Bildspeichereinheit (66) ausgegeben werden soll.

4. Bildverarbeitungsvorrichtung (1) nach Anspruch 3, wobei die Vorschaubild-Erzeugungseinheit (31) konfiguriert ist, um das Vorschaubild durch Ausdünnen des Eingangsbildes zu erzeugen.

5. Bildverarbeitungsvorrichtung (1) nach Anspruch 3, die ferner eine Vorschaubild-Speichereinheit umfasst, die konfiguriert ist, um das Vorschaubild zu speichern,
wobei die Vorschaubild-Erzeugungseinheit (31) konfiguriert ist, um das Vorschaubild parallel mit dem Speichern des Eingangsbildes durch die Bildspeichereinheit (66) zu erzeugen, und die Vorschaubild-Erzeugungseinheit (31) konfiguriert ist, um das Vorschaubild in der Vorschaubild-Speichereinheit zu speichern.

6. Bildverarbeitungsvorrichtung (1) nach Anspruch 3, wobei die Vorschaubild-Erzeugungseinheit (31) konfiguriert ist, um das Vorschaubild zu erzeugen, nachdem die Bildspeichereinheit (66) das Eingangsbild darin gespeichert hat.

7. Bildverarbeitungsvorrichtung (1) nach Anspruch 3, die ferner umfasst:
eine Bearbeitungsinhalte-Setzeinheit, die konfiguriert ist, um Bearbeitungsinhalte zu setzen, die angeben, wie das Eingangsbild bearbeitet werden soll; und
mehrere Bearbeitungseinheiten, die konfiguriert sind, um das Eingangsbild anhand spezifizierter Bearbeitungsinhalte zu bearbeiten, wobei
die Steuereinheit (20) konfiguriert ist, um wenigstens eine der Bearbeitungseinheiten auszuwählen, um das Eingangsbild anhand der spezifizierten Ausgabeform zu bearbeiten, und
die Vorschaubild-Erzeugungseinheit (31) konfiguriert ist, um das Vorschaubild anhand der durch die Steuereinheit (20) getroffenen Auswahl zu korrigieren.

8. Bildverarbeitungsvorrichtung (1) nach Anspruch 1, die ferner eine Informationsanzeigeeinheit umfasst, die konfiguriert ist, um das Eingangsbild und die spezifizierte Ausgabeform anzuzeigen.

9. Bildverarbeitungsvorrichtung (1) nach Anspruch 1, wobei die Bildverarbeitungsvorrichtung (1) umfasst:
eine Bildeingabeeinheit (600), die enthält:
eine Original-Leseeinheit (50), die konfiguriert ist, um ein Originalbild zu lesen;
eine Bildempfangseinheit (67), die konfiguriert ist, um ein Bild von einer externen Vorrichtung zu empfangen; und
die Bildspeichereinheit (66), die konfiguriert ist, um ein Bild zu speichern;
eine Bildausgabeeinheit (620), die enthält:
die Druckausgabeeinheit (550), die konfiguriert ist, um ein Bild auf ein Aufzeichnungsmedium zu drucken; und
eine Sendeeinheit (67), die konfiguriert ist, um ein Bild zu der externen Vorrichtung zu senden; und
wobei die Bildverarbeitungsvorrichtung (1) ferner eine Eingangsbild-Spezifizierungseinheit (310) umfasst, die konfiguriert ist, um das Eingangsbild zu spezifizieren.

10. Bildverarbeitungsvorrichtung (1) nach Anspruch 9, die ferner umfasst:
eine Bearbeitungsbetriebsart-Spezifizierungseinheit, die konfiguriert ist, um eine Bearbeitungsbetriebsart zu spezifizieren; und
eine Bearbeitungseinheit, die konfiguriert ist, um das Eingangsbild zu bearbeiten, wobei
die Bearbeitungseinheit konfiguriert ist, um das Eingangsbild anhand der Bearbeitungsbetriebsart zu bearbeiten, und
die Steuereinheit (20) konfiguriert ist, um wenigstens drei der Bildverarbeitungseinheiten (50, 67, 66, 550) anhand der Bearbeitungsbetriebsart zusätzlich zu dem Eingangsbild und den spezifizierten Ausgabeformen auszuwählen.

11. Bildverarbeitungsvorrichtung (1) nach Anspruch 10, wobei mehrere Eingangsbilder vorgesehen werden und wobei die Bearbeitungsbetriebsart das Kombinieren der Eingangsbilder im gleichen Format umfasst.

12. Bildverarbeitungsvorrichtung (1) nach Anspruch 10, wobei die Steuereinheit (20) ferner umfasst:
eine Vorbearbeitungs-Steuereinheit, die konfiguriert ist, um die Bearbeitungseinheit dazu zu veranlassen, das spezifizierte Eingangsbild zu bearbeiten, wenn das Eingangsbild in der Bildspeichereinheit (66) gespeichert ist;
eine Nachbearbeitungs-Steuereinheit, die konfiguriert ist, um die Bearbeitungseinheit dazu zu veranlassen, das Bild in der Bildspeichereinheit (66) zu bearbeiten, wenn das Bild in der Ausgabeform, die durch die Ausgabeform-Spezifizierungseinheit (320) spezifiziert wird, ausgegeben wird; und
eine Bearbeitungssteuerungs-Auswahleinheit, die konfiguriert ist, um in Übereinstimmung mit einer Kombination aus dem spezifizierten Eingangsbild, den durch die Ausgabeform-Spezifizierungseinheit (320) spezifizierten Ausgabeformen und der durch die Bearbeitungsbetriebsart-Spezifizierungseinheit spezifizierten Bearbeitungsbetriebsart die Vorbearbeitungs-Steuereinheit oder die Nachbearbeitungs-Steuereinheit zu wählen.

13. Bildverarbeitungsvorrichtung (1) nach Anspruch 12, wobei die Original-Leseeinheit (50) eine Einheit ist, die ein Originalbild optisch liest,
die Bearbeitungseinheit eine optische Einheit mit variabler Vergrößerung enthält, die konfiguriert ist, um eine variable Vergrößerung des Bildes vorzunehmen, wenn das Originalbild durch die Original-Leseeinheit (50) gelesen wird, und eine elektrische Einheit mit variabler Vergrößerung enthält, die konfiguriert ist, um die variable Vergrößerung des Bildes vorzunehmen, wenn das Bild in der Bildspeichereinheit (66) ausgegeben wird, und
die Bearbeitungssteuerungs-Auswahleinheit konfiguriert ist, um die Vorbearbeitungs-Steuereinheit auszuwählen, wenn das durch die Original-Leseeinheit (50) gelesene Originalbild durch die Eingangsbild-Spezifizierungseinheit (310) spezifiziert wird, wenn eine die variable Bildvergrößerung betreffende Betriebsart durch die Bearbeitungsbetriebsart-Spezifizierungseinheit spezifiziert wird und wenn nur die Ausgabe durch die Druckausgabeeinheit (550) durch die Ausgabeform-Spezifizierungseinheit (320) spezifiziert wird.

14. Bildverarbeitungsvorrichtung (1) nach Anspruch 13, wobei die Bearbeitungssteuerungs-Auswahleinheit konfiguriert ist, um die Nachbearbeitungs-Steuereinheit auszuwählen, wenn das durch die Original-Leseeinheit (50) gelesene Originalbild durch die Eingangsbild-Spezifizierungseinheit (310) spezifiziert wird, wenn die die variable Bildvergrößerung betreffende Betriebsart durch die Bearbeitungsbetriebsart-Spezifizierungseinheit spezifiziert wird und wenn durch die Ausgabeform-Spezifizierungseinheit (320) das Speichern in der Bildspeichereinheit (66) spezifiziert wird.

15. Bildverarbeitungsvorrichtung (1) nach Anspruch 1, die ferner umfasst:
eine Anwenderidentifizierungsinformation-Eingabeeinheit, die konfiguriert ist, um Anwenderidentifizierungsinformationen, die für einen Anwender eindeutig sind, für mehrere Anwender einzugeben; und
eine Beschränkungsinformation-Speichereinheit, in der die mehreren Teile von Anwenderidentifizierungsinformationen in Zuordnung zu Beschränkungsinformationen gespeichert sind, um in jeder Bildverarbeitungseinheit die Freigabe und Sperrung anzuzeigen, wobei die Steuereinheit (20) ferner umfasst:
eine Freigabe- und Sperrungs-Bestimmungseinheit, die konfiguriert ist, um zu bestimmen, ob jede einzelne Bildverarbeitungseinheit (50, 67, 66, 550) freigegeben oder gesperrt ist, indem auf die Beschränkungsinformationen Bezug genommen wird, die den Anwenderidentifizierungsinformationen in der Beschränkungsinformations-Speichereinheit entsprechen, wenn die Identifizierungsinformation-Eingabeeinheit die Anwenderidentifizierungsinformationen eingibt;
eine Nutzungsverhinderungseinheit, die konfiguriert ist, um die Nutzung der Bildverarbeitungseinheit zu verhindern, in der die Freigabe- und Sperrungs-Bestimmungseinheit bestimmt, dass die Bildverarbeitungseinheit gesperrt ist; und
eine Ankündigungseinheit, die konfiguriert ist, um einem Anwender die Sperrung der Nutzung der Bildverarbeitungseinheit (50, 67, 66, 550) anzukündigen.

16. Bildverarbeitungsvorrichtung (1) nach Anspruch 1, die ferner umfasst:
eine Anwenderidentifizierungsinformation-Eingabeeinheit, die konfiguriert ist, um Anwenderidentifizierungsinformationen, die für einen Anwender eindeutig sind, für mehrere Anwender einzugeben; und
eine Beschränkungsinformations-Speichereinheit, in der die mehreren Teile von Anwenderidentifizierungsinformationen in Zuordnung zu Beschränkungsinformationen gespeichert sind, um die Freigabe und die Sperrung in jeder Bearbeitungsbetriebsart anzugeben, wobei die Steuereinheit (20) ferner umfasst:
eine Freigabe- und Sperrungs-Bestimmungseinheit, die konfiguriert ist, um zu bestimmen, ob jede Bearbeitungsbetriebsart freigegeben oder gesperrt ist, indem auf die Beschränkungsinformationen Bezug genommen wird, die den Anwenderidentifizierungsinformationen in der Beschränkungsinformation-Speichereinheit entsprechen, wenn die Identifizierungsinformations-Eingabeeinheit die Anwenderidentifizierungsinformationen eingibt;
eine Nutzungsverhinderungseinheit, die konfiguriert ist, um die Nutzung der Bearbeitungsbetriebsart zu verhindern, in der die Freigabe- und Sperrungs-Bestimmungseinheit bestimmt hat, dass die Bearbeitungsbetriebsart gesperrt ist; und
eine Ankündigungseinheit, die konfiguriert ist, um einem Anwender die Sperrung der Nutzung der Bearbeitungsbetriebsart anzukündigen.

17. Bildverarbeitungsvorrichtung (1) nach einem der Ansprüche 1 bis 16, wobei
die zweite Ausgabeform der wenigstens zwei Ausgabeformen zusätzlich zu der ersten Ausgabeform der wenigstens zwei Ausgabeformen auf einem einzigen Arbeitsbildschirm spezifiziert wird.

18. Bildausgabeverfahren, das umfasst:
Zulassen des Spezifizierens von wenigstens zwei Ausgabeformen eines Eingangsbildes, bevor eine Starttaste gedrückt wird, um das Eingangsbild anhand der wenigstens zwei spezifizierten Ausgabeformen zu verarbeiten;
Auswählen wenigstens zweier Bildverarbeitungseinheiten (50, 67, 66, 550) aus mehreren Bildverarbeitungseinheiten (50, 67, 66, 550), um das Eingangsbild anhand der wenigstens zwei spezifizierten Ausgabeformen zu verarbeiten, wobei die wenigstens zwei Ausgabeformen aus der Ausgabe eines Bildes durch eine Druckausgabeeinheit (550), aus dem Speichern eines Bildes in einer Bildspeichereinheit (66) und aus dem Senden eines Bildes durch eine Sendeeinheit (67) spezifiziert werden; und
Veranlassen jeder der wenigstens zwei ausgewählten Bildverarbeitungseinheiten (50, 67, 66, 550), das Eingangsbild anhand der jeweils entsprechenden Ausgabe unter den wenigstens zwei spezifizierten Ausgabeformen zu verarbeiten.

19. Bildausgabeverfahren nach Anspruch 18, wobei
die zweite Ausgabeform der wenigstens zwei Ausgabeformen zusätzlich zu der ersten Ausgabeform der wenigstens zwei Ausgabeformen auf einem einzigen Arbeitsbildschirm spezifiziert wird.

20. Computerprogrammprodukt, in dem ein Computerprogramm gespeichert ist, das dann, wenn es ausgeführt wird, einen Computer dazu veranlasst, alle Schritte des Verfahrens nach Anspruch 18 oder 19, auszuführen.

## Revendications

1. Appareil de traitement d'images (1) comportant :
une pluralité d'unités de traitement d'images (50, 67, 66, 550) ;
un écran d'opération comprenant une unité de spécification de forme de sortie, ladite unité de spécification de forme de sortie (320) étant configurée pour autoriser au moins deux formes de sortie d'une image d'entrée à spécifier avant qu'une touche de début soit enfoncée pour traiter l'image entrée en fonction des au moins deux formes de sortie spécifiées, dans lequel
lesdites au moins deux formes de sortie sont spécifiées à partir d'une sortie d'une image par une unité de sortie d'impression (550) en mémorisant une image dans une unité de mémorisation d'image (66), et en transmettant une image par une unité de transmission (67) ; et
une unité de contrôle (20) configurée pour sélectionner au moins deux des unités de traitement d'images (50, 67, 66, 550) pour traiter l'image entrée en fonction des au moins deux formes de sortie spécifiées, et amener chacune des au moins deux unités de traitement d'images sélectionnées (50, 67, 66, 550) à traiter l'image entrée en fonction de la forme de sortie correspondante respective des au moins deux formes de sortie spécifiées.

2. Appareil de traitement d'images (1) selon la revendication 1, dans lequel l'appareil de traitement d'images (1) comprend :
une unité d'entrée d'image (600) qui comprend :
une unité de lecture d'original (50) configurée pour lire une image originale ;
une unité de réception d'image (67) configurée pour recevoir une image provenant d'un dispositif externe ; et
l'unité de mémorisation d'image (66) configurée pour mémoriser une image ;
une unité de sortie d'image (620) qui comprend :
l'unité de sortie d'impression (550) configurée pour imprimer une image sur un support d'enregistrement ; et
l'unité de transmission (67) configurée pour transmettre une image au dispositif externe; et
l'appareil de traitement d'images (1) comportant en outre une unité de spécification d'image d'entrée (310) configurée pour spécifier l'image d'entrée, dans lequel
l'unité de spécification d'image d'entrée (310) est configurée pour spécifier une image originale en tant qu'image d'entrée, l'unité de spécification de forme de sortie (320) est configurée pour spécifier une mémorisation en tant que forme de sortie de l'image d'entrée, de sorte que l'unité de contrôle (20) sélectionne l'unité de lecture d'original (50) pour lire une image originale et entrer l'image originale en tant qu'image d'entrée, et sélectionne l'unité de mémorisation d'image (66) pour mémoriser l'image d'entrée.

3. Appareil de traitement d'images (1) selon la revendication 2, dans lequel l'unité de contrôle (20) comporte en outre :
une unité de création d'image de prévisualisation (31) configurée pour créer une image de prévisualisation en fonction de l'image d'entrée avant que l'image d'entrée soit mémorisée dans l'unité de mémorisation d'image (66) ;
une unité d'affichage d'image de prévisualisation (31) configurée pour afficher l'image de prévisualisation ; et
une unité de décision de sortie configurée pour décider si l'image d'entrée correspondant à l'image de prévisualisation doit être délivrée à l'unité de mémorisation d'image (66).

4. Appareil de traitement d'images (1) selon la revendication 3, dans lequel l'unité de création d'image de prévisualisation (31) est configurée pour créer l'image de prévisualisation en amincissant l'image d'entrée.

5. Appareil de traitement d'images (1) selon la revendication 3, comportant en outre une unité de mémorisation d'image de prévisualisation configurée pour y mémoriser l'image de prévisualisation,
dans lequel l'unité de création d'image de prévisualisation (31) est configurée pour créer l'image de prévisualisation en parallèle avec l'unité de mémorisation d'image (66) mémorisant l'image d'entrée, et l'unité de création d'image de prévisualisation (31) est configurée pour mémoriser l'image de prévisualisation dans l'unité de mémorisation d'image de prévisualisation.

6. Appareil de traitement d'images (1) selon la revendication 3, dans lequel l'unité de création d'image de prévisualisation (31) est configurée pour créer l'image de prévisualisation après que l'unité de mémorisation d'image (66) a mémorisé l'image d'entrée.

7. Appareil de traitement d'images (1) selon la revendication 3, comportant en outre :
une unité de détermination de contenus d'édition configurée pour déterminer les contenus d'édition indiquant comment l'image d'entrée doit être éditée ; et
une pluralité d'unités d'édition configurées pour éditer l'image d'entrée en fonction des contenus d'édition spécifiés, où
l'unité de contrôle (20) est configurée pour sélectionner au moins une des unités d'édition pour éditer l'image d'entrée en fonction de la forme de sortie spécifiée, et
l'unité de création d'image de prévisualisation (31) est configurée pour corriger l'image de prévisualisation en fonction de la sélection effectuée par l'unité de contrôle (20).

8. Appareil de traitement d'images (1) selon la revendication 1, comportant en outre une unité d'affichage d'information configurée pour afficher l'image d'entrée et la forme de sortie spécifiée.

9. Appareil de traitement d'images (1) selon la revendication 1, dans lequel l'appareil de traitement d'images (1) comporte :
une unité d'entrée d'image (600) qui comprend :
une unité de lecture d'original (50) configurée pour lire une image originale ;
une unité de réception d'image (67) configurée pour recevoir une image provenant d'un dispositif externe ; et
l'unité de mémorisation d'image (66) configurée pour mémoriser une image ;
une unité de sortie d'image (620) qui comprend :
l'unité de sortie d'impression (550) configurée pour imprimer une image sur un support d'enregistrement ; et
une unité de transmission (67) configurée pour transmettre une image au dispositif externe; et
l'appareil de traitement d'images (1) comporte en outre une unité de spécification d'image d'entrée (310) configurée pour spécifier l'image d'entrée.

10. Appareil de traitement d'images (1) selon la revendication 9, comportant en outre :
une unité de spécification de mode d'édition configurée pour spécifier un mode d'édition ; et
une unité d'édition configurée pour éditer l'image d'entrée, dans lequel
l'unité d'édition est configurée pour éditer l'image d'entrée en fonction du mode d'édition, et
l'unité de contrôle (20) est configurée pour sélectionner au moins trois des unités de traitement d'images (50, 67, 66, 550) en fonction du mode d'édition en plus de l'image d'entrée et des formes de sortie spécifiées.

11. Appareil de traitement d'images (1) selon la revendication 10, dans lequel les images d'entrée sont multiples et le mode d'édition comprend la combinaison des images d'entrée dans le même format.

12. Appareil de traitement d'images (1) selon la revendication 10, dans lequel l'unité de contrôle (20), comprend en outre :
une unité de contrôle de pré-édition configurée pour amener l'unité d'édition à éditer l'image d'entrée spécifiée, lorsque l'image d'entrée est mémorisée dans l'unité de mémorisation d'image (66) ;
une unité de contrôle de post-édition configurée pour amener l'unité d'édition à éditer l'image dans l'unité de mémorisation d'image (66), lorsque l'image est délivrée dans la forme de sortie spécifiée par l'unité de spécification de forme de sortie (320) ; et
une unité de sélection de contrôle d'édition configurée pour sélectionner l'unité de contrôle de pré-édition ou l'unité de contrôle de post-édition selon la combinaison de l'image d'entrée spécifiée, les formes de sortie spécifiées par l'unité de spécification de forme de sortie (320), et le mode d'édition spécifié par l'unité de spécification de mode d'édition.

13. Appareil de traitement d'images (1) selon la revendication 12, dans lequel l'unité de lecture d'original (50) est une unité qui lit optiquement une image originale,
l'unité d'édition comprend une unité d'amplification variable optique configurée pour effectuer une amplification variable de l'image lorsque l'image originale est lue par l'unité de lecture d'original (50) et une unité d'amplification variable électrique configurée pour effectuer l'amplification variable de l'image lorsque l'image dans l'unité de mémorisation d'image (66) est délivrée, et
l'unité de sélection de contrôle d'édition est configurée pour sélectionner l'unité de contrôle de pré-édition, lorsque la lecture de l'image originale par l'unité de lecture d'original (50) est spécifiée par l'unité de spécification d'image d'entrée (310), lorsqu'un mode concernant l'amplification variable d'image est spécifié par l'unité de spécification de mode d'édition, et lorsque seulement une sortie par l'unité de sortie d'impression (550) est spécifiée par l'unité de spécification de forme de sortie (320).

14. Appareil de traitement d'images (1) selon la revendication 13, dans lequel l'unité de sélection de contrôle d'édition est configurée pour sélectionner l'unité de contrôle de post-édition, lorsque l'image originale lue par l'unité de lecture d'original (50) est spécifiée par l'unité de spécification d'image d'entrée (310), lorsque le mode concernant l'amplification variable d'image est spécifié par l'unité de spécification de mode d'édition, et lorsqu'une mémorisation dans l'unité de mémorisation d'image (66) est spécifiée par l'unité de spécification de forme de sortie (320).

15. Appareil de traitement d'images (1) selon la revendication 1, comportant en outre :
une unité d'entrée d'information d'identification d'utilisateur configurée pour entrer une information d'identification d'utilisateur, qui est unique à un utilisateur, pour une pluralité d'utilisateurs ; et
une unité de mémorisation d'information de restriction dans laquelle la pluralité d'informations d'identification d'utilisateur est mémorisée conjointement avec l'information de restriction pour indiquer la validation et l'invalidation dans chaque unité de traitement d'image, où l'unité de contrôle (20) comprend en outre :
une unité de détermination de validation et d'invalidation configurée pour déterminer si chaque unité de traitement d'images (50, 67, 66, 550) est validée ou invalidée en se référant à l'information de restriction correspondant à l'information d'identification d'utilisateur dans l'unité de mémorisation d'information de restriction lorsque l'unité d'entrée d'information d'identification entre l'information d'identification d'utilisateur ;
une unité d'interdiction d'utilisation configurée pour empêcher l'utilisation de l'unité de traitement d'images dans laquelle l'unité de détermination de validation et d'invalidation détermine que l'unité de traitement d'images est invalidée ; et
une unité d'information configurée pour informer un utilisateur de l'interdiction d'utilisation de l'unité de traitement d'images (50, 67, 66, 550).

16. Appareil de traitement d'images (1) selon la revendication 1, comportant en outre :
une unité d'entrée d'information d'identification d'utilisateur configurée pour entrer une information d'identification d'utilisateur, qui est unique pour un utilisateur, pour une pluralité d'utilisateurs ; et
une unité de mémorisation d'information de restriction dans laquelle la pluralité d'informations d'identification d'utilisateur est mémorisée conjointement avec une information de restriction indiquant une validation ou une invalidation dans chaque mode d'édition, où l'unité de contrôle (20) comprend en outre
une unité de détermination de validation et d'invalidation configurée pour déterminer si chaque mode d'édition est validé ou invalidé en se référant à l'information de restriction correspondant à l'information d'identification d'utilisateur dans l'unité de mémorisation d'information de restriction lorsque l'unité d'entrée d'information d'identification entre l'information d'identification d'utilisateur ;
une unité d'interdiction d'utilisation configurée pour empêcher l'utilisation du mode d'édition dans laquelle l'unité de détermination de validation et d'invalidation détermine que le mode d'édition est invalidé ; et
une unité d'annonce configurée pour informer un utilisateur de l'interdiction d'utilisation du mode d'édition.

17. Appareil de traitement d'images (1) selon l'une quelconque des revendications 1 à 16, dans lequel
la seconde forme de sortie des au moins deux formes de sortie est spécifiée en plus de la première forme de sortie des au moins deux formes de sortie sur un seul écran d'opération.

18. Procédé de sortie d'image comportant:
l'autorisation de la spécification d'au moins deux formes de sortie d'une image d'entrée avant qu'une touche de début soit enfoncée pour traiter l'image d'entrée en fonction des au moins deux formes de sortie spécifiées ;
la sélection d'au moins deux unités de traitement d'image (50, 67, 66, 550) parmi une pluralité d'unités de traitement d'images (50, 67, 66, 550) pour traiter l'image d'entrée en fonction des au moins deux formes de sortie spécifiées, où les au moins deux formes de sortie sont spécifiées à partir d'une sortie d'une image par une unité de sortie d'impression (550), en mémorisant une image dans une unité de mémorisation d'image (66), et en transmettant une image par une unité de transmission (67) ; et
l'action de chacune des au moins deux unités de traitement d'images sélectionnées (50, 67, 66, 550) pour traiter l'image d'entrée en fonction de la sortie correspondante respective parmi les au moins deux formes de sortie spécifiées.

19. Procédé de sortie d'image selon la revendication 18, dans lequel
la seconde forme de sortie des au moins deux formes de sortie est spécifiée en plus de la première forme de sortie des au moins deux formes de sortie sur un seul écran d'opération.

20. Produit de programme informatique qui mémorise un programme informatique qui, lorsqu'il est exécuté, amène un ordinateur à exécuter toutes les étapes du procédé selon la revendication 18 ou 19.
